# EUROPEAN PATENT APPLICATION

(11) **EP 1 796 323 A1**
(43) Date of publication of application: **13.06.2007**
(21) Application number: 05788022.1
(22) Date of filing: 28.09.2005
(51) Int. Cl.: H04L 12/56, H04L 12/28, H04Q 7/34

(54) **COMMUNICATION NETWORK MANAGEMENT METHOD, ACCESS ROUTER, AND MOBILE COMMUNICATION DEVICE**

(30) Priority: 30.09.2004 JP 2004289362
(71) Applicant: MATSUSHITA ELECTRIC INDUSTRIAL CO., LTD., Osaka 571-8501 (JP)
(72) Inventor: ASO, Keigo c/o Matsushita El.Ind.Co.Ltd, Chuo-ku, Osaka-shi, Osaka 540-6319 (JP); HIRANO, Jun c/o Matsushita El.Ind.Co.Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/017887
(87) International publication number: WO 2006/035838

(57) **Abstract**

Disclosed is a technique which reduces or omits the time needed for DADprocessing solicited when amobile communication device establishes a connection with a new subnetwork, thereby reducing the packet loss and delay to improve the communication efficiency. According to this technique, in a network in which a plurality of ARs 11 to 14 exist, when a mobile communication device (MN 10) establishes a connection with one of these plurality of ARs, in addition to the implementation of the DAD processing for confirming whether or not the address (CoA) of the MN is usable at the connection-accepting side, a wide-range DAD implementation request message including the interface ID of the MN is transmitted from the connection-accepting side AR to the other AR existing in a network of a given range (wide-range DAD effective area 31), and in a subnetwork under each of ARs, the DAD processing is conducted so as to confirm whether or not the address at the connection of the MN is usable . This enables the DADprocessing to be omitted when the MN moves to the other subnetwork.

## Description

### TECHNICAL FIELD

The present invention relates to a communication network management method, access router and mobile communication device related to a network technique including a mobile communication device such as a mobile node (MN) and mobile router (MR), and more particularly to a communication network management method, access router and mobile communication device for carrying out control on communications by use of a mobility support technology such as a mobile IP (Mobile Internet Protocol) when the mobile communication device conducts a handover between subnetworks.

### BACKGROUND ART

For example, the following Non-Patent Document 1 and Non-Patent Document 2 disclose a technique in which, when a mobile communication device such as a mobile node or mobile router makes a connection with a new subnetwork, the mobile communication device acquires a new global address matching this subnetwork so as to maintain the reachability by this global address. The new global address matching the connection-accepting side subnetwork is referred to as a CoA (Care-of Address). This CoA is a global address to be allocated temporarily to an MN in the connection-accepting side subnetwork with respect to an HoA (Home Address) allocated to the MN in advance.

The methods in which an MN acquires a CoA are roughly classified into two: a stateful mechanism and a stateless mechanism. In the case of the stateful mechanism, a CoA is allocated to an MN by, for example, a DHCP (Dynamic Host Configuration Protocol) or the like in a connection-accepting side subnetwork. Moreover, in the case of the stateless mechanism, the MN itself conducts an auto-configuration of a CoA.

On the other hand, the following Non-Patent Document 3 discloses a technique related to a DAD (Duplicate Address Detection). In this DAD processing, prior to the allocation of a unicast address to a communication device to be connected to a subnetwork, processing is conducted which confirms that this unicast address is unique. Accordingly, in a case in which a mobile communication device establishes a connection with a new subnetwork and acquires a CoA matching this subnetwork, a verification is made on the uniqueness of the CoA (i.e., the availability of the CoA) with respect to all the CoAs without depending upon an address acquisition method such as a stateful mechanism or stateless mechanism. Until the confirmation of the uniqueness by the DAD processing, the CoA is not allocated to the mobile communication device and, during the DAD processing, the mobile communication device cannot make a communication by way of a new connection-accepting side subnetwork.

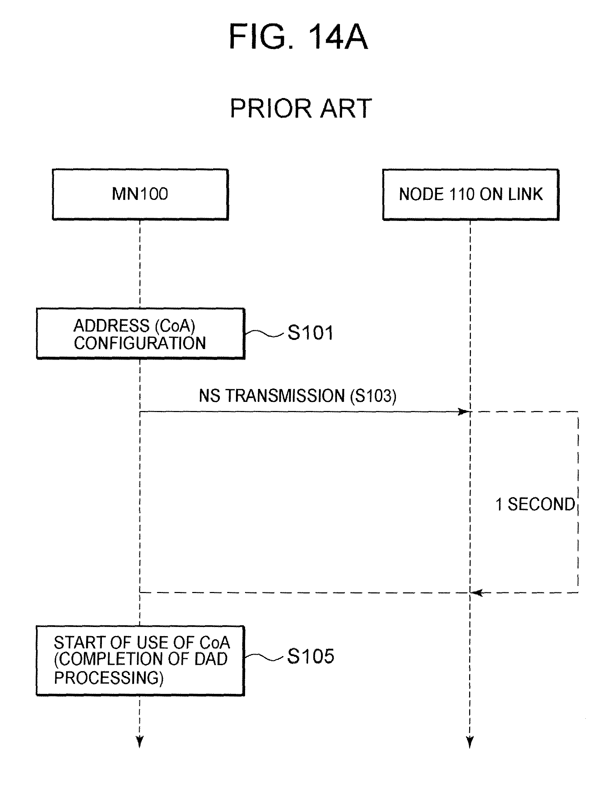

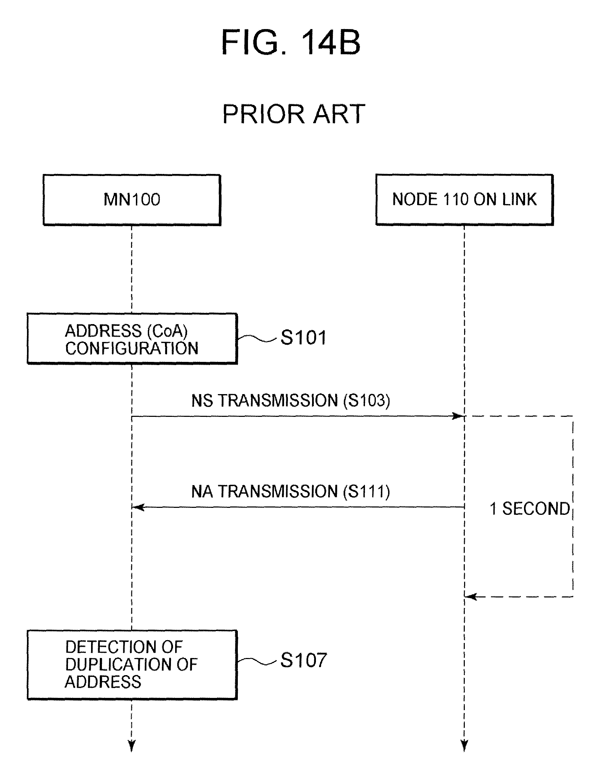

A brief description will be given hereinbelow of one example of DAD processing in which an address, an MN configures by using the stateless mechanism, is verified in a new connection-accepting side subnetwork. FIGs. 14A and 14B are sequence charts showing one example of DADprocessing according to a conventional technique. FIG. 14A is a sequence chart showing a case in which the address duplication is not detected by the DADprocessing, while FIG. 14B is a sequence chart showing a case in which the address duplication is detected by the DAD processing.

In Figs, 14A and 14B, an MN 100, by itself, produces (configures) a CoA to be used in a new subnetwork through the use of the stateless mechanism (step S101) and conducts multicast of a Neighbor Solicitation (which will sometimes be referred to as an NS in the following description) for the DAD processing, including this CoA, to a link of the new subnetwork (step S103). A node 110 in the link of the new subnetwork receives the NS transmitted from the MN 100.

The node 110 in the link, which has received the NS including the CoA confirms this CoA and, in the case of no agreement with the address it uses, ignores this NS while, in the case of the agreement with the address it uses, makes a response using an Neighbor Advertisement (NA). That is, as shown in FIG. 14A, in the case of no address duplication, no response takes place from the node 110 in the link and, in the case of no response from the NA within a specified period of time (usually, 1 second for default), the MN 100 makes a decision that the address is not in a duplicate state and starts the use of the CoA (step S105). In addition, as shown in FIG. 14B, upon receipt of a response using the NA from the node 110 in the link within a specified period of time (usually, 1 second for default) (step S111), the MN 100 makes a decision that the address is in the duplicate state (step S107) and, hence, conducts the processing for acquiring a new different CoA.
Non-Patent Document 1: Perkins, C. E. et. al., "IP Mo bility Support", IETF RFC 3344, Aug 2002.
Non-Patent Document 2: Johnson, D. B., Perkins, C. E., and Arkko, J., "Mobility Support in IPv6", IETF Internet Draft: draft-ietf-mobileip-ipv6-24.txt, Work In Progress, Jun 2003.
Non-Patent Document 3: Thomson, S. et. al., "IPv6 Sta teless Address Autoconfiguration", IETF RFC 2462, Dec 1998.

However, the normal DAD processing takes 1 second for default until the confirmation of the uniqueness of a CoA reaches completion. Moreover, in the case of a mobile communication device which is in a moving state, a change of the CoA takes place whenever it establishes a connection with a new subnetwork. In this case, for each CoA acquisition (for each connection with a new subnetwork), there is a need to conduct the processing related to the DAD with respect to the acquired CoA. In consequence, whenever the mobile communication device establishes a connection with a new subnetwork, the communication-impossible state occurs until the DAD processing reaches completion (1 second for default), which creates a problem in that packet loss and delay arise in the communications by the mobile communication device.

### DISCLOSURE OF THE INVENTION

In consideration of the above-mentioned problems, it is an object of the present invention to provide a communication network management method, access router and mobile communication device capable of cutting or omitting the time taken for the DAD processing, solicited when a mobile communication device establishes a connection with a new subnetwork, for reducing the packet loss and delay, thereby achieving the enhancement of the communication efficiency.

For achieving the above-mentioned purpose, a communication network management method according to the present invention for a communication system including a plurality of access routers and a mobile communication device connectable to a subnetwork under management of each of the plurality of access routers, comprises:
a step in which, when the mobile communication device establishes a connection with one of the plurality of access routers, the mobile communication device transmits a message for confirming the uniqueness of an address to be used in a subnetwork under the management of the access router which is an object of connection, to an arbitrary node in the subnetwork under the management of the access router with which the mobile communication device establishes the connection;
a step in which the access router which has received the message and with which the mobile communication device establishes the connection transmits a request message, which makes a request for confirming the uniqueness of an address to be used when the mobile communication device establishes the connection with the other access router in a subnetwork under management of the other access router, to the other access router; and
a step in which, upon receipt of the request message from the access router with which the mobile communication device establishes the connection, the other access router confirms the uniqueness of the address, which is used by the mobile communication device, in the subnetwork under the management of the other access router.
This arrangement enables the DAD processing in a subnetwork under the management of a plurality of predetermined access routers to be accomplished by conducting DAD processing for the mobile communication device (MN) once, thereby reducing or omitting the time to be taken for the DADprocessing solicited when the mobile communication device establishes a connection with a new subnetwork, which reduces the packet loss or delay so as to improve the communication efficiency.

In addition to the above-mentioned arrangement, the communication network management method according to the present invention further comprises:
a step of, when a result of the confirmation on the uniqueness of the address, which is used by the mobile communication device, in the other access router shows that the address is unusable because of being in a duplicate state, transmitting, to the access router with which the mobile communication device establishes the connection, an address duplicate notification message for notifying that the address is unusable; and
a step in which the access router which has received the address duplicate notification message from the other access router and with which the mobile communication device establishes the connection transmits an unusable-state notification message for the notification of the unusable-state of the address, which is used when the mobile communication device establishes the connection with the other access router in the subnetwork under the management of the other access router, to the mobile communication device.
With this arrangement, when an address in a duplicate state in a subnetwork under the management of a plurality of predetermined access routers, a mobile communication device can seize this fact.

Moreover, combined with the above-mentioned arrangement, the communication network management method according to the present invention further comprises:
a step of, when a result of the confirmation on the uniqueness of the address, which is used by the mobile communication device, in the other access router shows the uniqueness of the address, transmitting, to the access router with which the mobile communication device establishes the connection, an address confirmation notification message for notifying that the address is usable; and
a step in which the access router which has received the address confirmation notification message from the other access router and with which the mobile communication device establishes the connection transmits a usable-state notification message for the notification of the usable-state of the address, which is used when the mobile communication device establishes the connection with the other access router in the subnetwork under the management of the other access router, to the mobile communication device.
With this arrangement, in a case in which the DAD processing gains success in the subnetwork under the management of a plurality of predetermined access routers, the mobile communication device can seize this fact.

Still moreover, combined with the above-mentioned arrangement, the communication network management method according to the present invention further comprises:
a step in which the access router with which the mobile communication device establishes the connection acquires address information on the other access router; and
a step in which the access router with which the mobile communication device establishes the connection generates the request message to be transmitted to the other access router, on the basis of the address information on the other access router.
With this arrangement, the mobile communication device can grasp the address information on the access router which is an object subjected simultaneously to the DAD processing and can make a request for the DAD processing by itself.

Furthermore, for achieving the above-mentioned purpose, a communication network management method according to the present invention for a communication system including a plurality of access routers and a mobile communication device connectable to a subnetwork under management of each of the plurality of access routers, comprises:
a step in which the mobile communication device acquires address information on the plurality of access routers;
a step in which, when establishing a connection with one of the plurality of access routers, the mobile communication device transmits a message for confirming the uniqueness of an address, which is used in a subnetwork under the management of the access router with which the mobile communication device establishes the connection, to an arbitrary node in the subnetwork under the management of the access router with which the mobile communication device establishes the connection and, on the basis of the address information on the plurality of access routers, transmits, to the other access router, a request message for making a request for confirming the uniqueness of the address used when the mobile communication device establishes the connection with the other access router in a subnetwork under the management of the other access router; and
a step in which, upon receipt of the request message from the mobile communication device, the other access router confirms the uniqueness of the address used by the mobile communication device in the subnetwork under the management of the other access router.
With this arrangement, the DAD processing in the subnetwork under the management of a plurality of predetermined access routers is achievable by conducting the DAD processing for the mobile communication device once, which can reduce or omit the time to be taken for the DAD processing solicited when the mobile communication device establishes a connection with a new subnetwork, thus reducing the packet loss and delay to improve the communication efficiency.

Still furthermore, combined with the above-mentioned arrangement, the communication network management method according to the present invention further comprises a step of, when a result of the conformation of the uniqueness of the address, which is used by the mobile communication device, in the other access router shows that the address is unusable because of being in a duplicate state, transmitting, to the mobile communication device, an unusable-state notification message for notifying that the address is unusable.
With this arrangement, when an address in a duplicate state in a subnetwork under the management of a plurality of predetermined access routers, the mobile communication device can grasp this fact.

Yet furthermore, combined with the above-mentioned arrangement, the communication network management method according to the present invention further comprises a step of, when a result of the conformation of the uniqueness of the address, which is used by the mobile communication device, in the other access router shows the confirmation of the uniqueness of the address, transmitting, to the mobile communication device, a usable-state notificationmessage for notifying that the address is usable.
With this arrangement, when the DAD processing reaches success in a subnetwork under the management of a plurality of predetermined access routers, the mobile communication device can seize this fact.

In addition, combined with the above-mentioned arrangement, the communication network management method according to the present invention further comprises a step of, when the mobile communication device does not receive the unusable-state notification message from the access router with which the mobile communication device establishes the connection, making a decision that the address, which is used when the mobile communication device establishes a connection with the other access router in the subnetwork under the management of the other access router, is usable so that the address decided as being usable is used without confirming the uniqueness of this address when the mobile communication device moves and establishes a connection with the other access router.
With this arrangement, in the case of no reception of the notification indicative of the fact that the address is in a duplicate state in a subnetwork under the management of a plurality of predetermined access routers, the mobile communication device can seize that the DAD processing has reached success and can omit the DAD processing in a subnetwork with which it establishes a connection afterwards.

Still additionally, combined with the above-mentioned arrangement, the communication network management method according to the present invention further comprises a step in which each of the plurality of access routers existing in a predetermined area transmits an area information message including the same area information corresponding to the same predetermined area periodically or in accordance with a request from the mobile communication device;
a step of acquiring and holding the area information message when the mobile communication device establishes a connection with each of the plurality of access routers; and
a step in which the mobile communication device makes
a comparison between the area information acquired from the access router to be connected thereto after movement and the area information acquired from the access router connected thereto when a decision is made that the address used at the connection with the other access router is usable and, when the two area information agree with each other, a decision is made that the access router to be connected thereto after the movement is the other access router related to the address which was already decided as being usable.
With this arrangement, the mobile communication device can seize the access router set as existing in the same area and can specify an access router in the subnetwork subjected simultaneously to the DAD processing at the connection with one access router.

Yet additionally, combined with the above-mentioned arrangement, the communication network management method according to the present invention further comprises a step in which each of the plurality of access routers transmits a prefix information message including prefix information on the subnetwork under the management of the access router, periodically or in accordance with a request from the mobile communication device;
a step in which, at a connection with one of the plurality of access routers, the mobile communication device generates an address to be used in a subnetwork under the management of the access router, with which the mobile communication device establishes the connection, by making a combination of the prefix information and an interface ID of the mobile communication device; and
a step in which, when the interface ID of the mobile communication device is included in the request message, the other access router generates the address, which is used by the mobile communication device in the subnetwork under the management of the other access router and which is used for confirming the uniqueness, by making a combination of the prefix information on the subnetwork under the management of the other access router and the interface ID of the mobile communication device.
With this arrangement, a predetermined rule is set with respect to an address the mobile communication device uses, thereby enabling the reliable implementation of the DAD processing.

Furthermore, for achieving the above-mentioned purpose, an access router according to the present invention for use in a communication system including a plurality of access routers each managing a subnetwork with which a mobile communication device is connectable, comprises:
address confirmation message reception means for receiving, from the mobile communication device establishing a connection with a subnetwork under the management of the access router, a message for confirming the uniqueness of an address to be used by the mobile communication device in the subnetwork;
address confirmation request means for, upon receipt of the address confirmationmessage from the mobile communication device, transmitting, to the other access router, a request message for making a request for confirming the uniqueness of the address used when the mobile communication device establishes a connection with the other access router in a subnetwork under the management of the other access router;
address duplicate reception means for receiving a confirmation result indicative of the fact that the address detected by the other access router is unusable; and
unusable-state notification means for, upon receipt of the confirmation result indicative of the unusable state of the address from the other access router, notifying, to the mobile communication device, the unusable-state of the address used when the mobile communication device establishes a connection with the other access router in the subnetwork under the management of the other access router.
With this configuration, the DAD processing in a subnetwork under the management of a plurality of predetermined access routers can be implemented by conducting the DAD processing for a mobile communication device once, which can reduce or omit the time taken for the DAD processing solicited when the mobile communication device establishes a connection with a new subnetwork, thereby reducing the packet loss and delay so as to enhance the communication efficiency. Moreover, in a case in which an address is in a duplicate state in the subnetwork under the management of the plurality of predetermined access routers, the mobile communication device can grasp this fact.

In addition, combined with the above-mentioned configuration, the access router according to the present invention further comprises:
address confirmation reception means for receiving a confirmation result, indicative of the fact that the address detected by the other access router is usable, from the other access router; and
usable-state notification means for, upon receipt of the confirmation result indicative of the usable-state of the address from the other access router, notifying, to the mobile communication device, the usable-state of the address to be used when the mobile communication device establishes a connection with the other access router in the subnetwork under the management of the other access router.
With this configuration, when the DAD processing gains success in the subnetwork under a plurality of predetermined access routers, the mobile communication device can grasp this fact.

Still additionally, combined with the above-mentioned configuration, the access router according to the present invention further comprises:
address information holding means for holding address information on the other access router existing in a predetermined area;
request message generation means for generating the request message to the other access router on the basis of the address information on the other access router held in the address information holding means; and
area information transmission means for transmitting an area information message including the same area information as area information set in the other access router existing in the same predetermined area periodically or in accordance with a request from the mobile communication device.
With this configuration, the access router can seize the address information on a different access router set as existing in the same area.

Furthermore, for achieving the above-mentioned purpose, an access router according to the present invention for use in a communication system including a plurality of access routers each managing a subnetwork with which a mobile communication device is connectable, comprises:
address confirmation request reception means for receiving a request message transmitted from an access router, different from this access router, which has received the message transmitted from the mobile communication device establishing the different access router to make a request for confirming the uniqueness of an address to be used in a subnetwork under the management of the different access router, with the request message being for making the request for confirming the uniqueness of the address to be used by the mobile communication device in the subnetwork it manages; and
address confirmation means for, upon receipt of the request message, confirming the uniqueness of the address to be used by the mobile communication device in the subnetwork it manages.
With this configuration, the DAD processing in a subnetwork managed by a plurality of predetermined access routers can be implemented by conducting the DAD processing for a mobile communication device once, thereby reducing or omitting the time to be taken for the DAD processing solicited when the mobile communication device establishes a connection with a new subnetwork, which reduces the packet loss or delay so as to improve the communication efficiency.

Still furthermore, combined with the above-mentioned configuration, the access router according to the present invention further comprises address duplicate notification means for, when a result of the confirmation on the uniqueness of the address to be used by the mobile communication device shows that the address is unusable because of being in a duplicate state, notifying the unusable-state of the address to the access router with which the mobile communication device establishes a connection.
With this configuration, when an address is in a duplicate state in a subnetwork managed by a plurality of predetermined access routers, a mobile communication device can grasp this fact.

Moreover, for achieving the above-mentioned purpose, an access router according to the present invention for use in a communication system including a plurality of access routers each managing a subnetwork with which a mobile communication device is connectable, comprises:
address confirmation request reception means for receiving a request message from the mobile communication device, which establishes a connection with an access router different from this access router, for making a request to confirm the uniqueness of the address to be used by the mobile communication device in the subnetwork it manages; and
address confirmation means for, upon receipt of the request message, confirming the uniqueness of the address to be used by the mobile communication device in the subnetwork it manages.
With this configuration, the DAD processing in a subnetwork managed by a plurality of predetermined access routers can be implemented by conducting the DAD processing for a mobile communication device once, thereby reducing or omitting the time to be taken for the DAD processing solicited when the mobile communication device establishes a connection with a new subnetwork, which reduces the packet loss or delay so as to improve the communication efficiency.

Still moreover, combined with the above-mentioned configuration, the access router according to the present invention further comprises unusable-state notification means for, when a result of the confirmation on the uniqueness of the address to be used by the mobile communication device shows a detection of the address being unusable because being in a duplicate state, notifying the unusable-state of the address to the mobile communication device.
With this configuration, when an address is in a duplicate state in a subnetwork managed by a plurality of predetermined access routers, a mobile communication device can seize this fact.

Yet moreover, combined with the above-mentioned configuration, the access router according to the present invention further comprises address reservation means for, when a result of the confirmation on the uniqueness of the address to be used by the mobile communication device shows the confirmation of the uniqueness of the address, carrying out address reservation processing to inhibit the use of the address by a communication device other than the mobile communication device.
This configuration enables an address whose uniqueness has been confirmed through the DAD processing to be reserved for a mobile communication device so as to inhibit the allocation of the address to other communication devices (particularly, evil-minded communication device).

In addition, combined with the above-mentioned configuration, the access router according to the present invention further comprises area information transmission means for transmitting an area information message including area information set to be identical to area information set in the plurality of access routers existing in a predetermined area periodically or in accordance with a request from the mobile communication device.
With this configuration, the mobile communication device can seize an access router set as existing in the same area and can specify an access router in the subnetwork subjected simultaneously to the DAD processing at the connection with one access router.

Still additionally, combined with the above-mentioned configuration, the access router according to the present invention further comprises address generationmeans for, when the interface ID of the mobile communication device is included in the request message, generating the address to be used by the mobile communication device in the subnetwork under the management thereof, for confirming the uniqueness by making a combination of prefix information on the subnetwork under the management thereof and the interface ID of the mobile communication device.
With this configuration, a predetermined rule is set with respect to an address the mobile communication device uses, thereby enabling the reliable implementation of the DAD processing.

Furthermore, for achieving the above-mentioned purpose, a mobile communication device according to the present invention, which is connectable to a subnetwork under the management of each of a plurality of access routers, comprises:
message reception means for, at a connection with one of the plurality of access routers, receiving a message including information indicative of a predetermined function from the access router which is the object of connection;
address confirmation message transmission means for, at a connection with one of the plurality of access routers, transmitting a message for confirming the uniqueness of an address, which is used in a subnetwork under the management of the access router which is the object of connection, to an arbitrary node in the subnetwork under the management of the access router which is the object of connection;
timer means for measuring time upon receipt of the message including the information indicative of the predetermined function; and
address usage control means for, when the time measured by the timer means exceeds a predetermined time without receiving, from the access router which is the object of connection, a unusable-state notification message for a notification of an unusable-state of the address used when the mobile communication device establishes a connection with the other access router in a subnetwork under the management of the other access router, executing control to use the address without confirming the uniqueness of the address at the connection with the subnetwork under the management of the other access router.
This arrangement enables the DAD processing in a subnetwork under the management of a plurality of predetermined access routers to be accomplished by conducting the DAD processing for amobile communication device (MN) once, thereby reducing or omitting the time to be taken for the DAD processing solicited when the mobile communication device establishes a connection with a new subnetwork, which reduces the packet loss or delay so as to improve the communication efficiency. Moreover, in the case of no reception of a notification indicative of the address duplication in a subnetwork under the management of a plurality of predetermined access routers after a predetermined time elapses, the mobile communication device can seize that the DAD processing has reached success, thereby omitting the DAD processing in a subnetwork with which it establishes a connection afterwards.

Still furthermore, for achieving the above-mentioned purpose, a mobile communication device according to the present invention, which is connectable to a subnetwork under the management of each of a plurality of access routers, comprises:
message reception means for, at a connection with one of the plurality of access routers, receiving a message including information indicative of a predetermined function from the access router which is the object of connection;
address information holding means for holding address information on the plurality of access routers;
message transmission means for, at a connection with one of the plurality of access routers, transmitting a message for confirming the uniqueness of an address, which is used in a subnetwork under the management of the access router which is the object of connection, to an arbitrary node in the subnetwork under the management of the access router which is the object of connection and for, on the basis of the address information on the plurality of access routers, transmitting, to the other access router, a request message for making a request for confirming the uniqueness of the address used when the mobile communication device establishes the connection with the other access router in a subnetwork under the management of the other access router;
timer means for measuring time upon receipt of the message including the information indicative of the predetermined function; and
address usage control means for, when the time measured by the timer means exceeds a predetermined time without receiving, from the access router which is the object of transmission of the request message, a unusable-state notification message for a notification of an unusable-state of the address used when the mobile communication device establishes a connection with the other access router in the subnetwork under the management of the other access router, executing control to use the address without confirming the uniqueness of the address at a connection with a subnetwork under the management of the other access router.
This arrangement enables the DAD processing in a subnetwork under the management of a plurality of predetermined access routers to be accomplished by conducting the DAD processing for a mobile communication device once, thereby reducing or omitting the time to be taken for the DAD processing solicited when the mobile communication device establishes a connection with a new subnetwork, which reduces the packet loss or delay so as to improve the communication efficiency. Moreover, in the case of no reception of a notification indicative of the address duplication in a subnetwork under the management of a plurality of predetermined access routers after a predetermined time elapses, the mobile communication device can seize that the DAD processing has reached success, thereby allowing the omission of the DAD processing in a subnetwork which is an object of subsequent connection.

In addition, combined with the above-mentioned configuration, the mobile communication device according to the present invention further comprises:
a step for, at a connection with each of the plurality of access routers, acquiring an area information message including area information and holding the area information; and
area decision means for making a comparison between the area information acquired from the access router to be connected thereto after movement and the area information acquired from the access router connected thereto when a decision is made that the address used at the connection with the other access router is usable and for, when the two area information agree with each other, making a decision that the access router to be connected thereto after the movement is the other access router related to the address which was already decided as being usable.
With this arrangement, the mobile communication device can seize the access router set as existing in the same area and can specify an access router in the subnetwork subjected simultaneously to the DAD processing at the connection with one access router.

Still additionally, combined with the above-mentioned configuration, the mobile communication device according to the present invention further comprises address generation means for, at a connection with one of the plurality of access routers, generating an address to be used in the subnetwork under the management of the access router which is the object of connection by making a combination of the prefix information and the interface ID of the mobile communication device.
With this configuration, a predetermined rule is set with respect to an address the mobile communication device uses, thereby enabling the reliable implementation of the DAD processing.

The present invention has the above-mentioned configurations, and provides an effect for reducing or omitting the time to be taken for the DAD processing solicited when a mobile communication device establishes a connection with a new subnetwork, thereby reducing the packet loss or delay so as to improve the communication efficiency.

### BRIEF DESCRIPTION OF THE DRAWINGS

[FIG. 1] is an illustrative view showing an example of a configuration of a communication system according to a first embodiment of the present invention and showing a flow of a wide-range DAD implementation request message.
[FIG. 2] is a block diagram showing an example of a configuration of an MN 10 according to the first embodiment of the present invention.
[FIG. 3] is a block diagram showing an example of a configuration of an AR 11 according to the first embodiment of the present invention.
[FIG. 4] is a block diagram showing an example of a configuration of an AR 12 according to the first embodiment of the present invention.
[FIG. 5] is a block diagram showing an example of a configuration of a router 15 according to the first embodiment of the present invention.
[FIG. 6] is a sequence chart showing an example of a first operation according to the first embodiment of the present invention.
[FIG. 7] is a sequence chart showing an example of a second operation according to the first embodiment of the present invention.
[FIG. 8] is an illustrative view showing an example of a configuration of a communication system according to a second embodiment of the present invention and showing a flow of a wide-range DAD implementation request message.
[FIG. 9] is a block diagram showing an example of a configuration of an MN 10 according to the second embodiment of the present invention.
[FIG. 10] is a block diagram showing an example of a configuration of an AR 11 according to the second embodiment of the present invention.
[FIG. 11] is a sequence chart showing an example of an operation according to the second embodiment of the present invention.
[FIG. 12] is an illustration of an example of a configuration of a communication system according to a third embodiment of the present invention.
[FIG. 13] is an illustration of an example of a configuration of a communication system according to a fourth embodiment of the present invention.
[FIG. 14A] is a sequence chart when an address duplication is not detected by DAD processing according to a conventional technique.
[FIG. 14B] is a sequence chart when an address duplication is detected by the DAD processing according to the conventional technique.

### BEST MODE FOR CARRYING OUT THE INVENTION

First of all, a description will be given of the outline of the present invention. In the present invention, in a network where there exist a plurality of ARs (Access Routers), at a connection of an MN to one of these plurality of ARs, DAD processing is conducted in the connection-accepting side so as to confirm whether the address (CoA) of the MN is usable or not and, at the same time, DAD processing is implemented to check whether the address to be employed when the MN establishes a connection with the other AR (AR other than the AR which is the object of connection) existing in a given range of the network (wide-range DAD effective area) is usable or not. Thus, if the DAD processing is conducted only once with respect to the MN when it first moves into that wide-range DAD effective area, it is possible to omit the DAD processing in a case in which the MN establishes a connection with an AR existing in the wide-range DAD effective area while moving in the wide-range DAD effective area. In this description, the term "wide-range DAD processing" indicates, when the MN makes a connection with an arbitrary AR, not only the DAD processing to be conducted in the connection-accepting side AR but also the DAD processing to be conducted in the other AR.

First to fourth embodiments of the present invention will be described hereinbelow with reference to the drawings.

### <First Embodiment>

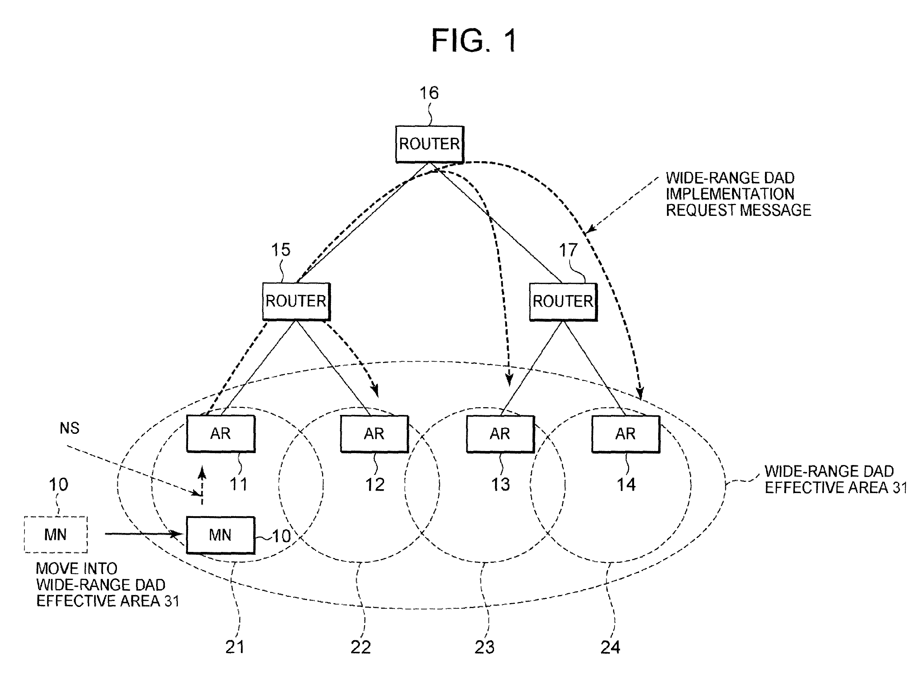

In the first embodiment of the present invention, a description will first be given of a case in which an MN moves into a wide-range DAD effective area and an AR with which the MN has established a connection issues a wide-range DAD request. FIG. 1 is an illustrative view showing an example of a configuration of a communication system according to the first embodiment of the present invention and showing a flow of a wide-range DAD implementation request message.

The communication system shown in FIG. 1 is made up of a movable MN 10, four ARs 11 to 14 and three routers 15 to 17. Although in the communication system shown in FIG. 1 the router 15 which makes a connection with the AR 11 and the AR 12 and the router 17 which makes a connection with the AR 13 and the AR 14 have a network topology establishing a connection with the router 16, this network topology and the numbers of ARs 11 to 14 and routers 15 to 17, and others, are shown as only one example, and the present invention is not limited to this configuration shown in FIG. 1.

In FIG. 1, there is shown a state in which the MN 10 moves from the exterior of a wide-range DAD effective area 31 into a subnetwork 21 managed by the AR 11 and establishes a connection with the AR 11. This wide-range DAD effective area 31 is a set area of subnetworks 21 to 24 under the management of the ARs 11 to 14 and, in FIG. 1, it is illustratively shown as an area including the respective subnetworks 21 to 24.

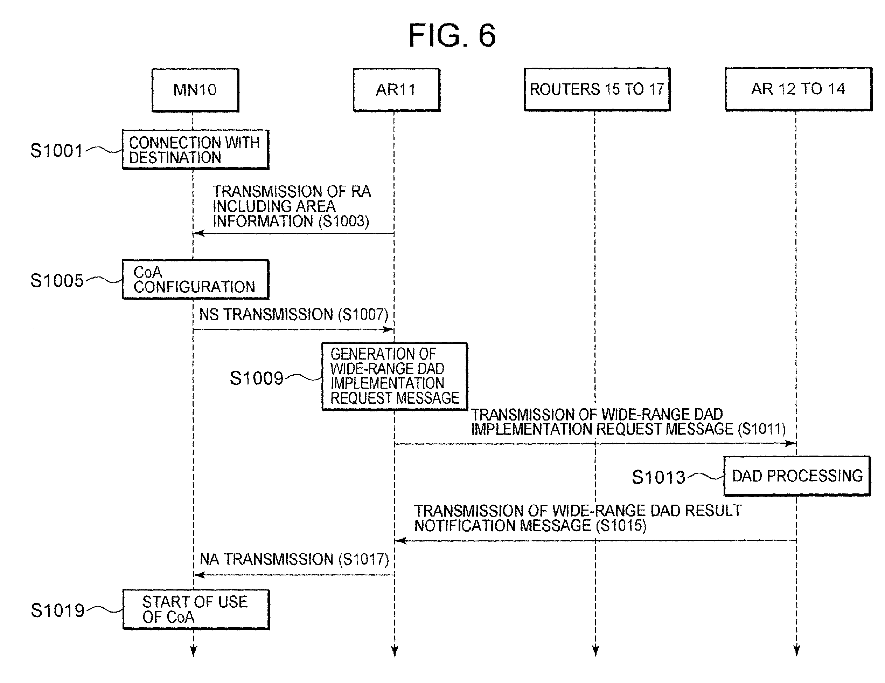

In addition, in FIG. 1, a flow of a wide-range DAD implementation request message to be transmitted from the AR 11, which has received an NS from the MN 10, to the respective ARs 12 to 14 is indicated by dotted lines. This flow of the wide-range DAD implementation request message corresponds to an example of a first operation which will be mentioned later and it will be described in detail with reference to a sequence chart of FIG. 6.

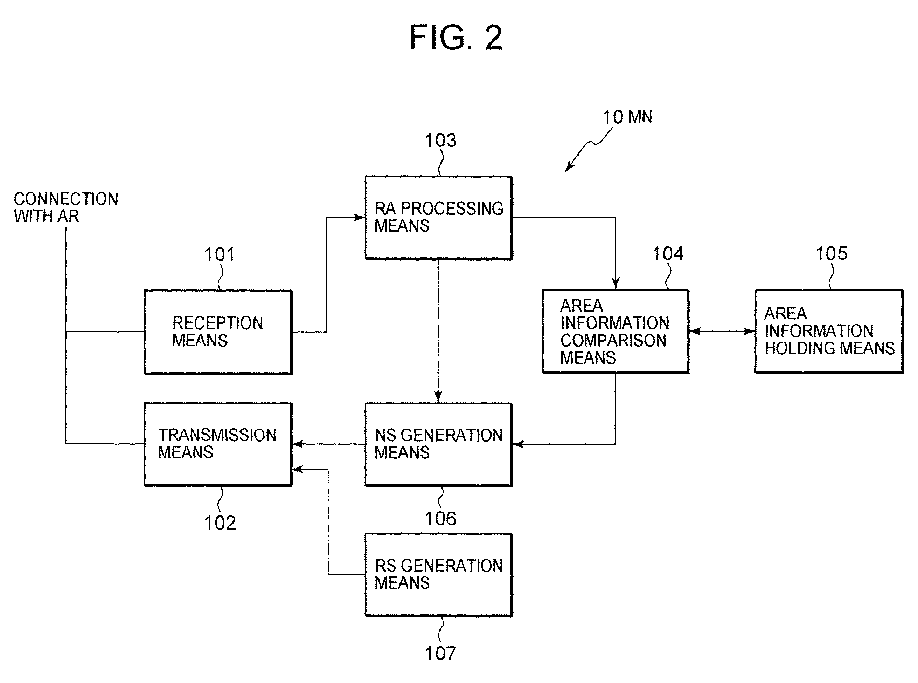

Secondly, a description will be given of configurations of the MN 10, the AR 11, the ARs 12 to 14 and the routers 15 to 17 in the communication system shown in FIG. 1. First, referring to FIG. 2, a description will be given of a configuration of the MN 10 according to the first embodiment of the present invention. FIG. 2 is a block diagram showing an example of a configuration of the MN 10 according to the first embodiment of the present invention. In FIG. 2, the MN 10 is composed of a reception means 101, a transmission means 102, an RA processing means 103, an area information comparison means 104, an area information holding means 105, an NS generation means 106 and an RS generation means 107.

The reception means 101 and the transmission means 102 are connected through radio communications to the ARs (ARs 11 to 14), thus serving as means to make a communication with the ARs 11 to 14 and an arbitrary node existing in a higher order. The RA processing means 103 carries out the processing related to an RA (Router Advertisement) received from the connection-accepting side ARs 11 to 14. At the reception of the RA from the ARs 11 to 14 immediately after movement, it acquires area information enabling the identification of the wide-range DAD effective area 31 and prefix information of the subnetworks 21 to 24 managed by the ARs 11 to 14 which are currently in connection, and hands over these information to the area information comparison means 104.

A description will be given hereinbelow of the area information. The area information is information enabling the identification of the wide-range DAD effective area 31. For example, the area information is unique identification information set for each of different wide-range DAD effective areas 31, and the same area information is set in all the ARs 11 to 14 existing in the same wide-range DAD effective area 31. That is, since the same area information is set in an RA to be transmitted from each of the ARs 11 to 14 lying in the same wide-range DAD effective area 31, the MN 10 can refer to this area information to seize that the ARs 11 to 14 exist in the same wide-range DAD effective area 31.

Moreover, as the area information, it is also possible to use the identification information on the respective ARs 11 to 14 (for example, prefix of the ARs 11 to 14, link local address of the ARs 11 to 14, NAI (Network Access Identifier) of the ARs 11 to 14). In a case in which the identification information on the respective ARs 11 to 14 is used as the area information, in the MN 10, at the acquisition of the identification information on the connection-accepting side ARs 11 to 14, the area information comparison means 104, which will be mentioned later, refers to list information (in-area AR list) of ARs existing in the same wide-range DAD effective area 31 so as to check whether or not the connection was made with the other ARs 11 to 14 existing in the wide-range DAD effective area 31 identical to that of the connection-accepting side ARs 11 to 14. If the connection was made with the other ARs 11 to 14 in the same wide-range DAD effective area 31, a decision is made that the DAD processing (wide-range DAD processing) was already implemented in the wide-range DAD effective area 31, thus omitting the DAD processing at the connection to the connection-accepting side ARs 11 to 14. Incidentally, in this case, there is a need for the MN 10 to acquire and hold the aforesaid in-area AR list in advance. For example, as the methods of acquiring this in-area AR list, various types of methods are employable, such as a method of receiving an arbitrary message including an in-area AR list from an AR (in particular, an AR connected at the first entry in a specified wide-range DAD effective area 31), a method of acquiring an in-area AR list from a predetermined information management server and a method in which an operator of the MN 10 sets an in-area AR list in the MN 10 in advance.

In addition, the area information comparison means 104 receives an instruction from the RA processing means 103 so as to carry out the processing for, on the basis of the notified area information, determining whether or not the current connection position is in a wide-range DAD processing possible area (i.e., the wide-range DAD effective area 31) and determining whether or not the wide-range DAD processing was already implemented and the DAD processing is omissible. As a result, if the current connection position is in the wide-range DAD effective area 31 and the wide-range DAD processing was already implemented, the area information comparison means 104 omits the DAD processing and immediately gives an instruction to start the use of a CoA. On the other hand, in the case of no implementation of the wide-range DAD processing although it is in the wide-range DAD effective area 31, for carrying out the DAD processing with respect to the generated CoA, the area information comparison means 104 gives an instruction to the NS generation means 106 so as to transmit an NS to the ARs 11 to 14 which are currently in connection. The area information holding means 105 is a means for holding the area information and the information on whether or not the wide-range DAD processing was already implemented in the wide-range DAD effective area 31 related to that area information. Incidentally, it is also possible to store the information indicative of one of the subnetworks 21 to 24 where the wide-range DAD process gains success (the address is effective) /becomes a failure (the address is in a duplicate state), and others.

Moreover, the NS generation means 106 receives an instruction from the area information comparison means 104 so as to generate an NS for confirming the uniqueness of the notified CoA, and carries out the processing to transmit this NS to the subnetworks 21 to 24 under the management of the ARs 11 to 14 which are currently in a connection state. Still moreover, the RS generation means 107 carries out the processing to generate an RS (Router Solicitation). This RS is a message for making a transmission request for an RA to the ARs 11 to 14 after the MN 10 establishes a connection with a destination network. The RS to be generated by the RS generation means 107 can be a normal RS, or it can also be an RS in which flag information is set which is for notifying the possibility of the wide-range DAD processing.

With the above-described configuration, the MN shown in FIG. 2 refers to the RA received from the destination AR to make a decision as to whether the wide-range DAD processing is available or not, and if the wide-range DAD processing reaches success, when a connection has been made with the other AR existing in the same wide-range DAD effective area 31, it is possible to start the use of the generated CoA without carrying out the DAD processing.

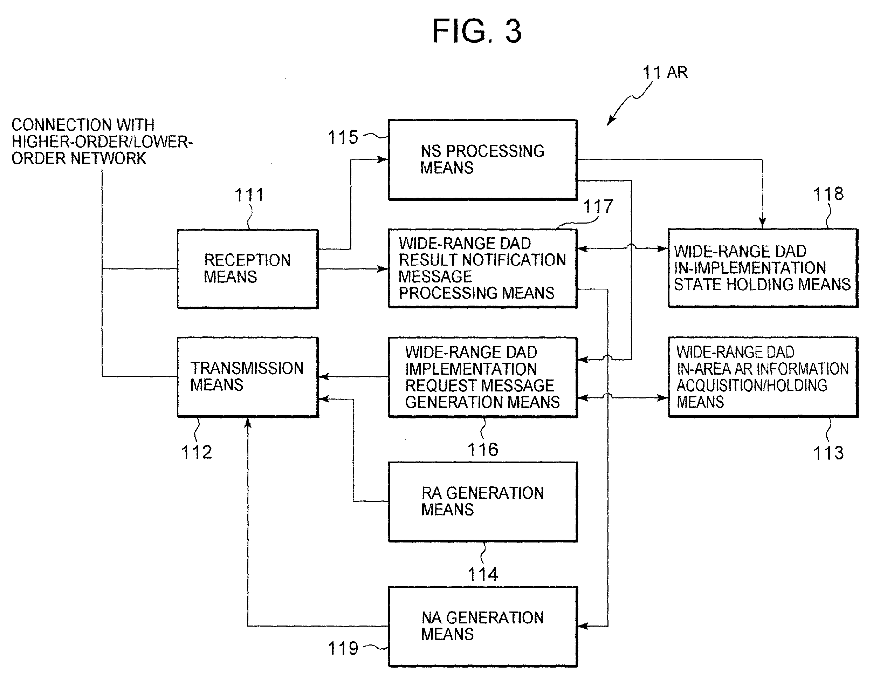

Furthermore, referring to FIG. 3, a description will be given of a configuration of the AR 11 according to the first embodiment of the present invention. FIG. 3 is a block diagram showing an example of a configuration of the AR 11 according to the first embodiment of the present invention. In this case, the AR 11 is an AR with which the MN 10 first establishes a connection in the wide-range DAD effective area 31 and, when the MN 10 makes a connection with the AR 11, the AR 11 conducts an operation related to the wide-range DAD processing so that the DAD processing on a CoA usable by the MN 10 is conducted in each of the subnetworks 22 to 24 managed by each of the other ARs 12 to 14.

The AR 11 shown in FIG. 3 is composed of a reception means 111, a transmission means 112, a wide-range DAD in-area AR information acquisition/holding means 113, an RA generation means 114, an NS processing means 115, a wide-range DAD implementation request message generation means 116, a wide-range DAD result notification message processing means 117, a wide-range DAD in-implementation state holding means 118 and an NA generation means 119.

The reception means 111 and the transmission means 112 are means for making a communication with an arbitrary node existing in a lower-order network (subnetwork 21) or in a higher-order network. Moreover, the wide-range DAD in-area AR information acquisition/holding means 113 performs the processing to acquire/holds the information (AR list) on the other ARs 12 to 14 existing in the same wide-range DAD effective area 31.

The RA generation means 114 carries out the processing to generate and transmit an RA periodically or upon receipt of an RS from the MN 10. It is preferable that, in the RA to be generated, there are set flag information indicative of the wide-range DAD processing being feasible and area information enabling the identification of the wide-range DAD effective area 31. Moreover, the NS processing means 115 carries out the processing on an NS received from the MN 10. If this NS is an NS for the DAD, the NS processing means 115 gives an instruction to make the wide-range DAD in-implementation state holding means 118 store the information on the MN 10 which has transmitted this NS. Still moreover, the NS processing means 115 notifies an interface ID or CoA of the MN 10, included in the NS, to the wide-range DAD implementation request message generation means 116 and carries out the processing to give an instruction for the generation/transmission of a wide-range DAD implementation request message.

The wide-range DAD implementation request message generation means 116 receives an instruction from the NS processingmeans 115 to carry out the processing for generating and transmitting a wide-range DAD implementation request message including the notified interface ID or CoA of the MN 10. The wide-range DAD implementation request message is transmitted to the other ARs 12 to 14 by referring to the information on the ARs 12 to 14 acquired from the wide-range DAD in-area AR information acquisition/holding means 113.

The wide-range DAD result notification message processing means 117 acquires the interface ID or CoA of the MN 10, which is an object, from the receivedmessage and notifies this information to the wide-range DAD in-implementation state holding means 118 so as to carry out the processing for confirm whether or not it is a result on the MN 10 which is in wide-range DAD implementation. If the MN 10 which is the object is the MN 10 which is in wide-range DAD implementation, the wide-range DAD result notification message processing means 117 makes a request to the NA generation means 119 for transmitting an NA which indicates the fact that the result of the wide-range DAD processing shows NG. If the wide-range DAD result notification message is transmitted when the wide-range DAD result indicates one of OK and NG, the wide-range DAD result notification message processing means 117 makes a request to the NA generation means 119 for transmitting an NA indicative of one of OK and NG as the result of the wide-range DAD processing.

Moreover, the wide-range DAD in-implementation state holding means 118 serves as a means to receive an instruction from the NS processing means 115 and hold the information on the MN 10 which is an object of the wide-range DAD processing. Incidentally, it is preferable to start a timer for grasp the elapse of time from the start of the holding of the information on the MN 10. Among the information to be held in this wide-range DAD in-implementation state holding means 118, there are, for example, the interface ID or CoA of the MN 10, HoA, and others. Still moreover, upon receipt of an instruction from the wide-range DAD result notification message processing means 117, the wide-range DAD in-implementation state holding means 118 confirms whether or not the result of the wide-range DAD processing, notified, shows the MN 10 which is in the wide-range DAD processing implementation and, if it shows the MN 10 which is in the wide-range DAD processing implementation, deletes this entry and further notifies, to the MN 10, the fact that the result of the wide-range DAD processing shows NG. Yet moreover, if, of the information on the MN 10 held, there is an entry that the value of the timer is longer than a specified period of time, the wide-range DAD in-implementation state holding means 118 makes a decision that the wide-range DAD result notification message related to that entry has not been received (i.e., makes a decision that the result of the wide-range DAD processing shows OK) and deletes that entry. In a case in which the wide-range DAD result notification message is transmitted in order to indicate one of OK and NG as the wide-range DAD result, since a decision on the result of the wide-range DAD processing is made on the basis of the contents included in the wide-range DAD result notification message, it is preferable that the decision indicating that the wide-range DAD result shows OK is not made on the basis of the elapsed time measured by the timer.

The NA generation means 119 receives an instruction from the wide-range DAD result notification message processing means 117 to generate an NA indicative of the fact that the result of the wide-range DAD processing shows NG and transmit it to the specified MN 10. Incidentally, in a case in which the wide-range DAD result notification message is transmitted in order to indicate one of OK and NG as the result of the wide-range DAD processing, the NA generation means 119 generates and transmits an NA indicative of one of the results (OK or NG) of the wide-range DAD processing notified from the wide-range DAD result notification message processing means 117.

With the above-described configuration, the AR 11 shown in FIG. 3 transmits an RA, which indicates that the wide-range DAD processing is available, to the MN 10 connected as a subordinate and, when receiving an NS for the DAD from the MN 10, transmits a wide-range DAD implementation request message to each of the other ARs 12 to 14, thereby carrying out the DAD processing with respect to the CoA related to the MN 10 in the subnetworks 22 to 24 stemming from the other ARs 12 to 14, and upon receipt of a wide-range DAD result notification message indicative of a result of the DAD processing in each of the ARs 12 to 14, it notifies this result to the MN 10.

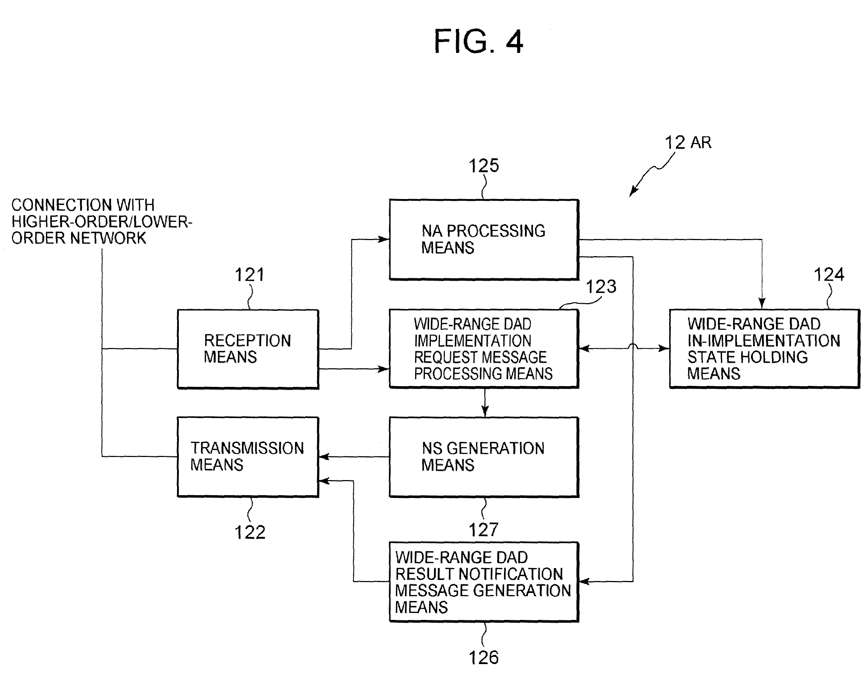

Furthermore, referring to FIG. 4, a description will be given hereinbelow of a configuration of the AR 12 according to the first embodiment of the present invention. FIG. 4 is a block diagram showing an example of a configuration of the AR 12 according to the first embodiment of the present invention. The ARs 12 to 14 have the same configuration, that is, the AR 13 and the AR 14 have the configuration shown in FIG. 4.

The AR 12 shown in FIG. 4 is made up of a reception means 121, a transmissionmeans 122, a wide-range DAD implementation request message processing means 123, a wide-range DAD in-implementation state holding means 124, an NA processing means 125, a wide-range DAD result notification message generation means 126 and an NS generation means 127.

The reception means 121 and the transmission means 122 are means for making communications with an arbitrary node existing in a lower-order network (subnetwork 22) under the management of the AR 12 or in a higher-order network. The wide-range DAD implementation request message processing means 123 gives an instruction to the wide-range DAD in-implementation state holding means 124 for storing the information on the MN 10 included in the received wide-range DAD implementation request message. Moreover, for example, the wide-range DAD implementation request message processing means 123 generates a CoA for the MN 10 by making a combination of an interface ID of the MN 10 or an interface ID portion of the CoA included in the received wide-range DAD implementation request message and a prefix used in the subnetwork 22 under the management thereof, and gives an instruction to the NS generation means so as to make the NS generation means 127 generate and transmit an NS for the confirmation of the uniqueness of this CoA.

Moreover, the wide-range DAD in-implementation state holding means 124 serves as a means to, upon receipt of an instruction from the wide-range DAD implementation request message processing means 123, hold the information on the MN 10 which is an object of the wide-range DAD processing. Incidentally, it is preferable to start a timer for seizing the elapsed time from the start of holding of the information on the MN 10. Among the information to be held in this wide-range DAD in-implementation state holding means 124, there are, for example, the interface ID or CoA of the MN 10, HoA and others. Still moreover, upon receipt of an instruction from the NA processing means 125, the wide-range DAD in-implementation state holding means 124 confirms whether or not the result of the wide-range DAD processing, notified, shows the MN 10 which is in the wide-range DAD processing implementation and, if it signifies the MN 10 which is in the wide-range DAD processing implementation, deletes this entry and notifies the fact that the result of the wide-range DAD processing indicates NG, to the AR (wide-range DAD implementation request message transmission side) with which the MN 10 is in connection. Yet moreover, if, of the information on the MN 10 held, there is an entry that the value of the timer exceeds a specified period of time, the wide-range DAD in-implementation state holding means 124 makes a decision that the NA related to that entry has not been received (i.e. , makes a decision that the result of the wide-range DAD processing shows OK) and deletes that entry. In a case in which the wide-range DAD result notification message is transmitted in order to indicate one of OK and NG as the wide-range DAD result, when, of the information on the MN 10 held in the wide-range DAD in-implementation state holding means 124, there is an entry that the value of the timer exceeds a specified period of time, the wide-range DAD in-implementation state holding means 124 deletes that entry and gives an instruction to the wide-range DAD result notification message generation means 126 so as to make the wide-range DAD result notification message generation means 126 generate and transmit a wide-range DAD result notification message indicative of the fact that the wide-range DAD processing shows OK.

In a case in which the NA received from an arbitrary node in the subnetwork managed by this AR 12 shows NG on the DAD, the NA processing means 125 makes a confirmation to the wide-range DAD in-implementation state holding means 124 as to whether or not the CoA related to NG pertains to the MN 10 which is in the wide-range DAD processing implementation. If the confirmation shows the MN 10 which is in the wide-range DAD processing implementation state, the NA processing means 125 gives an instruction to the wide-range DAD result notification message generation means 126 so as to make the wide-range DAD result notification message generation means 126 return a wide-range DAD result notification message, indicative of the fact that the result of the confirmation on the uniqueness of that CoA shows NG, to an AR (wide-range DAD implementation request message transmission side) with which the MN 10 is in connection.

In addition, upon receipt of an instruction from the NA processing means 125, the wide-range DAD result notification message generation means 126 carries out the processing to generate and transmit a wide-range DAD result notification message including the information on the MN 10 in which the wide-range DAD processing has resulted in NG. In a case in which the wide-range DAD result notification message is transmitted in order to indicate one of OK and NG as the wide-range DAD processing, upon receipt of an instruction from the wide-range DAD in-implementation state holding means 124, the wide-range DAD result notification message generation means 126 generates and transmits a wide-range DAD result notification message including the information on the MN 10 in which the wide-range DAD processing has resulted in OK. Still additionally, upon receipt of an instruction from the wide-range DAD implementation request message processing means 123, the NS generation means 127 carries out the processing to generate and transmit an NS for confirming the uniqueness on the designated CoA.

With the above-described configuration, when receiving a wide-range DAD implementation request message from the other AR (in this case, AR 11), each of the ARs 12 to 14 shown in FIG. 4 generates a CoA of the MN 10 by combining a prefix of the subnetwork 22 to 24 under the management thereof and the notified interface ID of the MN 10 and generates an NS including this CoA and transits it to the subnetwork 22 to 24 related thereto, which enables conducting the DAD processing for confirming the uniqueness of a CoA which the MN 10 may use in the future, and which allows transmitting, to the wide-range DAD implementation request message transmission side (AR 11), the result of the DAD processing in a state included in the wide-range DAD result notification message.

In this case, although the configuration of the AR (AR 11 shown in FIG. 3) with which the MN 10 first establishes a connection and the configuration of the AR (AR 12 shown in FIG. 4) different from the AR with which the MN 10 first establishes a connection have been described in a state separated from each other for making the explanation clear, for example, in a case in which the MN 10 is activated at an arbitrary point in the wide-range DAD effective area or in other cases, the AR with which the MN 10 first establishes a connection is not always determined. Accordingly, in the case of configuring a network actually, it is preferable that an AR having a configuration made by combining the configuration of the AR 11 shown in FIG. 3 and the configuration of the AR 12 shown in FIG. 4 is located as the ARs 11 to 14.

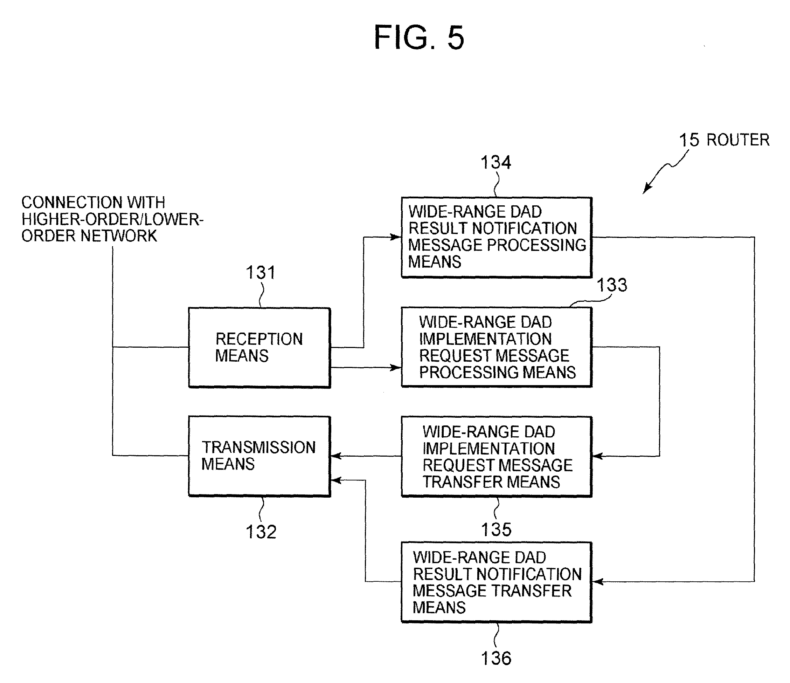

Furthermore, referring to FIG. 5, a description will be given hereinbelow of a configuration of a router 15 according to the first embodiment of the present invention. FIG. 5 is a block diagram showing an example of a configuration of the router 15 according to the first embodiment of the present invention. The routers 15 to 17 have the same configuration, that is, the routers 16 and 17 have the configuration shown in FIG. 5.

The router 15 shown in FIG. 5 is made up of a reception means 131, a transmission means 132, a wide-range DAD implementation request message processing means 133, a wide-range DAD result notification message processing means 134, a wide-range DAD implementation request message transfer means 135, and a wide-range DAD result notification message transfer means 136.

The reception means 131 and the transmission means 132 are means to make communications with an arbitrary node (in the case of the router 15, AR 11, AR 12, router 16) with which the router 15 establishes a communication or an arbitrary node existing ahead of it. Moreover, upon receipt of a wide-range DAD implementation request message, the wide-range DAD implementation request message processing means 133 gives an instruction to the wide-range DAD implementation request message transfer means 135 for transferring this wide-range DAD implementation request message. Still moreover, upon receipt of a wide-range DAD result notification message, the wide-range DAD result notification message processing means 134 gives an instruction to the wide-range DAD result notification message transfer means 136 for transferring this wide-range DAD result notification message.

Upon receipt of an instruction from the wide-range DAD implementation request message processing means 133, the wide-range DAD implementation request message transfer means 135 carries out the processing to transfer the received wide-range DAD implementation request message to the other AR or router. Although an all-router multicast address can be used as the destination address of this wide-range DAD implementation request message, it is preferable that the wide-range DAD implementation request message is transmitted from an interface other than the interface which has first received this wide-range DAD implementation request message.

Moreover, upon receipt of an instruction from the wide-range DAD result notification message processing means 134, the wide-range DAD result notification message transfer means 136 carries out the processing to transfer the received wide-range DAD result notification message to the other AR or router. Although an all-router multicast address can be used as the destination address of this wide-range DAD result notification message, it is preferable that the wide-range DAD result notification message is transmitted from an interface other than the interface which has received the wide-range DAD result notification message.

With the above-described configuration, each of the routers 15 to 17 shown in FIG. 5 can transfer the wide-range DAD implementation request message and the wide-range DAD result notification message and it can transmit and receive the wide-range DAD implementation request message and the wide-range DAD result notification message between the respective ARs 11 to 14 in the wide-range DAD effective area 31. Incidentally, as will be mentioned later, there is no need for the routers 15 to 17 to have the configuration shown in FIG. 5 in the case of the following first operation example, while there is a need for the routers 15 to 17 to have the configuration shown in FIG. 5 in the case of the second operation example which will be mentioned later.

### (First Operation Example)

Secondly, a description will be given of an operation according to the first embodiment of the present invention. First, as the first operation example, a description will be given of a case in which an MN having a wide-range DAD function relevant to the present invention moves to a subnetwork having the same wide-range DAD function and managed by an AR. In this first operation example, the MN 10 has the aforesaid configuration shown in FIG. 2, the AR 11 has the aforesaid configuration shown in FIG. 3, and each of the ARs 12 to 14 has the aforesaid configuration shown in FIG. 4.

FIG. 6 is a sequence chart showing the first operation example according to the first embodiment of the present invention. The MN 10 establishes a connection with a destination subnetwork (step S1001) and receives an RA transmitted periodically from the AR 11 or self-transmits an RS to make a request to the AR 11 for the transmission of an RA. With this processing, the MN 10 receives the RA (step S1003). It is preferable that flag information indicative of the fact that the wide-range DAD processing is feasible is included in the RA transmitted from the AR 11 so that the MN 10 can seize that the AR 11 has the wide-range DAD function relevant to the present invention.

In addition, the MN 10 generates a CoA to be used in that subnetwork 21 by combining a prefix included in the received RA and its own interface ID (step S1005). Still additionally, for confirming the uniqueness of this CoA, for example, the MN 10 transmits an NS (Neighbor Solicitation) including this CoA to an Unsolicited-Node multicast address (multicast address to unsolicited node) (step S1007).

In the case of the reception of the NS for the confirmation of the uniqueness of a CoA from the MN 10, the AR 11 conducts the wide-range DAD processing on the CoA included in this NS. For example, this wide-range DAD processing is conducted as follows. First, the AR 11 generates a wide-range DAD implementation request message including the interface ID of the MN 10, obtainable from the CoA, or a wide-range DAD implementation request message including the CoA itself (step S1009), and transmits it to the other AR (AR 12, AR 13, AR 14) existing in the same area (step S1011). For the transmission of this wide-range DAD implementation request message, it is preferable that the AR 11 previously acquires the information (AR list) on the other ARs 12 to 14 existing in the same wide-range DAD effective area 31 as that to which it pertains. For example, it is also appropriate that the AR 11 acquires this AR list from an information management server (not shown) provided in the wide-range DAD effective area 31. Moreover, it is also acceptable that a manager of this network (manager of the wide-range DAD effective area 31) manually sets it in the AR 11.

Each of the ARs 12 to 14 in the same wide-range DADeffective area 31, which has received the wide-range DAD implementation request message, generates the same message as the NS to be transmitted when the MN 10, which conducts the DAD processing, establishes a connection with each of the subnetworks 22 to 24 and transmits this message to each of the subnetworks 22 to 24 under the management of each of the ARs 12 to 14 itself, so the MN 10 carries out the DAD processing on the CoA usable in each of the subnetworks 22 to 24 (step S1013).

There is a need for each of the ARs 12 to 14 to generate a CoA to be used at the connection with each of the subnetworks 22 to 24 and to transmit an NS including this CoA to each of the subnetworks 22 to 24 it manages. As a CoA generation method to be employed at this time, for example, there is a method of generating a CoA of the MN 10 usable in each of the subnetworks 22 to 24 by combining a prefix of each of the subnetworks 22 to 24 and the interface ID (extractable from the wide-range DAD implementation request message) of the MN 10.

In addition, in the case of the reception of an NA within a specified period of time, each of the ARs 12 to 14 which has transmitted an NS in place of the MN 10 and which has carried out the uniqueness confirmation on the CoA in each of the subnetworks 12 to 14 to which the MN 10 pertains grasps that the DAD processing is NG (the address is in a duplicate condition) and transmits a wide-range DAD result notification message for the notification of the fact that the DAD processing is NG, as a response to the wide-range DAD implementation request message to the wide-range DAD implementation request message transmission side (AR 11) (step S1015).

Lastly, when the AR 11, which has transmitted the wide-range DAD implementation request message, receives a wide-range DAD result notification message from at least one of the ARs 12 to 14 within a predetermined stand-by time (allowable time from the transmission a wide-range DAD implementation request message until the reception of a wide-range DAD result notification message), the AR 11 generates an NA indicative of the fact that the wide-range DAD result is NG and transmits it to the MN 10 (step S1017).

On the other hand, in a case in which each of the ARs 12 to 14 does not receive an NA within the specified period of time in the DAD processing in the step S1013, it seizes that the DAD processing is OK (the address is not in a duplicate condition). In this case, each of the ARs 12 to 14 does not transmit a wide-range DAD result notification message. Moreover, in a case in which the AR 11 does not receive a wide-range DAD result notification message from any AR 12 to 14 within a predetermined stand-by time, the NA transmission from the AR 11 to the MN 10 is not made in the step S1017 and, in this case, the MN 10 makes a decision that the wide-range DAD processing has reached success. For example if each of the ARs 12 to 14 seizes that the DAD processing is OK (the address is not duplicate) in the step S1013, it is also possible that each of the ARs 12 to 14 notifies, to the AR 11, a wide-range DAD result notification message indicative of the fact that the DAD processing is OK and the AR 11 notifies the success of the wide-range DAD processing through an NA.

Thus, when the wide-range DAD processing has reached success, this signifies that, for example, the DAD processing on a CoA usable by the MN 10 in each of the subnetworks 22 to 24 has reached completion in advance. Accordingly, for example, the DAD processing on the CoA produced by the MN 10 has reached completion by a combination of a prefix of each of the subnetworks 22 to 24 and its own interface ID, and when the MN 10 newly establishes a connection with the subnetworks 22 to 24 in the wide-range DAD effective area, without conducting the DAD processing on the CoA of the MN 10 to be used in these subnetworks 22 to 24, the MN 10 can use the CoA. Incidentally, it is preferable that a CoA usable by the MN 10 in each of the subnetworks 22 to 24 is reserved by, for example, each of the ARs 12 to 14 so as to inhibit the CoA on which the DAD processing has reached completion from being used by communication nodes other than the MN 10.

Although the details of processing are not shown in FIG. 6, as well as the processing pertaining to the conventional technique, the DAD processing is also conducted in a subnetwork (subnetwork 21 managed by the AR 11) with which the MN 10 establishes a connection and, in consequence, the use of the CoA of the MN 10 starts in the subnetwork 21 (step S1019). In this case, as in the case of the processing (processing shown in FIG. 14B) pertaining to the conventional technique, it is necessary that the address duplication is detected when the reception of an NA takes place from a node on a link of the subnetwork 21 and the MN 10 carries out the processing for the acquisition of a different CoA usable in the subnetwork 21.

Moreover, in a case in which the wide-range DAD processing becomes NG, the application of some operation examples are considerable. For example, it is also possible that the MN 10 generates a new CoA by using a different interface ID or the like and again conducts an operation of the wide-range DAD processing. For example, this operation can be conducted repeatedly until the wide-range DAD processing reaches success, or that it is limited up to a predetermined number of times. Still moreover, for example, when the MN 10 receives an NA from the AR 11, it is also acceptable that the MN 10 makes a decision that the address is in a duplicate state and, subsequently, at the connections to all the subnetworks 22 to 24 in the wide-range DAD effective area 31, it performs the conventional DAD processing in each of the subnetworks 22 to 24. In this case, the NA transmitted from the AR 12 to the MN 10 can be a message for merely notifying the fact that the wide-range DAD processing is NG.

In addition, for example, there is a possibility that only the DAD processing in one subnetwork (for example, the subnetwork 23) within the wide-range DAD effective area 31 becomes NG. In such a case, for example, the AR 11 transmits an NA including the information for the identification of the subnetwork 23 (for example, prefix information on the subnetwork 23) to the MN 10, which can notify that the DAD processing related to the subnetwork 23 is NG, and for the connection with the subnetwork 23, there is a need for the MN 10 to newly conduct the DAD processing on a CoA to be used in this subnetwork 23. On the other hand, with respect to the subnetworks (subnetworks 22, 24) other than it, a specified CoA is usable without carrying out the DAD processing. For example, since the MN 10 can grasp that a CoA produced by combining the prefix of the subnetwork 23 and its own interface ID falls into an address duplicate condition, it is preferable that the MN 10 generates a CoA different from the aforesaid CoA (CoA in a duplicate state) to carry out the DAD processing in the subnetwork 23.

Still additionally, for example, in a case in which each of the ARs 12 to 14 which has conducted the DAD processing in each of the subnetworks 22 to 24 in the step S1013 detects an address duplication, it can also newly generate a different CoA for the MN 10 so as to again conduct the DAD processing with respect to this different CoA. At this time, if the DAD processing on this different CoA turns to OK, a wide-range DAD result notification message including this different CoA is transmitted to the AR 11 in the step 1015, and the AR 11 transmits an NA including this different CoA to the MN 10, so the MN 10 can previously acquire the CoA on which the DAD processing has reached completion. Yet additionally, as an example of the application, for example, in a case in which an address usable in the subnetworks 22 to 24 is allocated by a DHCP server, it is also acceptable that an address on which the DAD processing has already reached completion is allocated to the ARs 12 to 14 by the DHCP server and this address is notified as a CoA for the MN 10 through a wide-range DAD result notification message and an NA to the MN 10. In the above-mentioned case, it is preferable that a predetermined stand-by time (allowable time until the reception of the wide-range DAD result notification message) to be set in the AR 11 is set to be longer than the stand-by time in the above-described operation.

### (Second Operation Example)

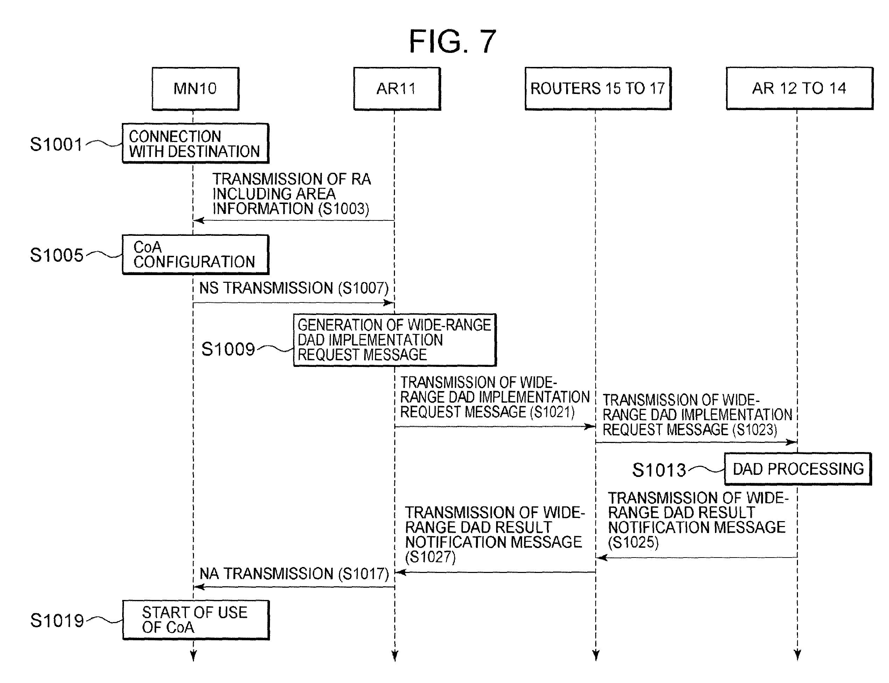

Secondly, a description will be given of a second operation example according to the first embodiment of the present invention. FIG. 7 is a sequence chart showing a second operation example according to the first embodiment of the present invention. Although in the above-described first operation example, for example, the AR 11 refers to an AR list acquired in advance to directly transmit a wide-range DAD implementation request message to an address in the AR list, the second operation example employs a method of repeatedly conducting the transfer by routers (routers 15 to 17) in a network as shown in FIG. 7 for finally forwarding a wide-range DAD implementation request message to each of the ARs 12 to 14.

In this second operation example, the MN 10 has the aforesaid configuration shown in FIG. 2. the AR 11 has the aforesaid configuration shown in FIG. 3, the ARs 12 to 14 have the aforesaid configuration shown in FIG. 4, and the routers 15 to 17 have the aforesaid configuration shown in FIG. 5. Moreover, in the second operation example, the transfer of a wide-range DAD implementation request message by the routers 15 to 17 in a step S1021 and step S1023 shown in FIG. 7 corresponds to the transmission of a wide-range DAD implementation request message in S1011 of FIG. 6, and the transfer of a wide-range DAD result notification message by the routers 15 to 17 in a step S1025 and step S1027 shown in FIG. 7 corresponds to the transmission of a wide-range DAD result notification message in the step S1015 of FIG. 6.

In the case of the transfer of a wide-range DAD implementation request message by the routers 15 to 17 in the step S1021 and step S1023 of FIG. 7, for example, the AR 11 sets and transmits an all-router multicast address as a destination of this wide-range DAD implementation request message and, upon receipt of this message, a router transfers it to a different network with which it has a connection, thereby forwarding the wide-range DAD implementation request message to all the routers in the network. Moreover, when the transmission is made to a multicast address for which ARs in the wide-range DAD effective area 31 subscribe, this wide-range DAD implementation request message can also be forwarded to all ARs existing in a network of an arbitrary range.

In addition, in the step S1021 and step S1023 of FIG. 7, when a wide-range DAD implementation request message is transferred through the routers 15 to 17, in a step A1025 and step S1027 of FIG. 7, a wide-range DAD result notification message is to be similarly transferred through the routers 15 to 17. In this case, the routers 15 to 17 which have received a wide-range DAD result notification message transmitted from each of the ARs 12 to 14 transfer it to a different network with which they have a connection, which enables finally transferring this wide-range DAD result notification message to the wide-range DAD implementation request message transmission side (AR 11). For example, this is realizable by setting an all-router multicast address as the destination of the wide-range DAD result notification message.

### (Third Operation Example)

Furthermore, as a third operation example, a description will be given of a case in which an MN (conventional MN) having no wide-range DAD function relevant to the present invention moves to a subnetwork managed by an AR having a wide-range DAD function. A sequence chart in this case becomes equal to that (sequence chart shown in FIG. 6 or 7) described in the first operation example or the second operation example, and an MN according to the conventional technique transmits an NS for the DAD processing in a step S1007 so as to carry out the wide-range DAD processing relevant to the present invention on the basis of this NS. However, since the MN 10 does not know the implementation of the wide-range DAD, when it subsequently moves to a subnetwork (subnetworks 22-24) in the same wide-range DAD effective area 31, the conventional DAD processing is again implemented. Therefore, a network system composed of ARs having a wide-range DAD function relevant to the present invention does not exclude an MN according to the conventional technique, that is, it also permits a connection of an MN based on the conventional technique.

### (Fourth Operation Example)

Still furthermore, as a fourth operation example, a description will be given of a case in which an MN having a wide-range DAD function relevant to the present invention moves to a subnetwork managed by an AR (conventional AR) having no wide-range DAD function. In this case, an RA from the AR 11 with which the MN 10 establishes a connection does not include area information, and the MN 10 receives the RA excluding this area information, and a network containing the AR 11 seizes that it is an area where the wide-range DAD is not conducted. Accordingly, in the subnetworks 21 to 24 managed by the ARs 11 to 14, the MN 10 generates a CoA so as to carry out the conventional DAD processing which transmits an NS. Therefore, the MN 10 having the wide-range DAD function relevant to the present invention can make a connection with a network system composed of ARs based on the prior art technique.

As described above, according to the first embodiment of the present invention, when an arbitrary AR (for example, AR11) existing within a predetermined wide-range DAD effective area 31 carries out the DAD processing on a CoA of the MN 10 which establishes a connection with this AR 11, it is possible to simultaneously conduct the DAD processing on the CoA of the MN 10 in a different AR (for example, AR 12 to 14) within the DAD effective area 31. Thus, by carrying out the DAD processing in the subnetwork under this AR only once, the MN 10 is capable of completing the DAD processing required for a connection to a subnetwork under a different AR, which enables omitting the DAD processing at the connection to the different AR after the subsequent movement.

### <Second Embodiment>

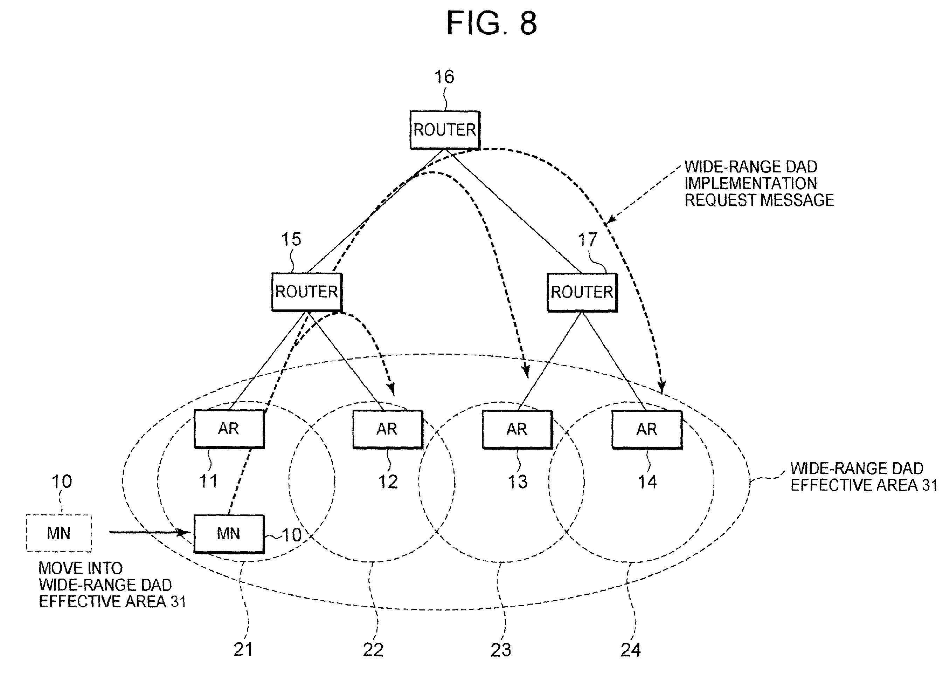

In addition, as a second embodiment of the present invention, a description will be given of a case in which an MN which has moved into a wide-range DAD effective area issues a wide-range DAD request. FIG. 8 is an illustrative view showing an example of a configuration of a communication system according to the second embodiment of the present invention and showing a flow of a wide-range DAD implementation request message. The communication system shown in FIG. 8 has the same configuration as that of the communication system shown in FIG. 1, and the description thereof will be omitted.

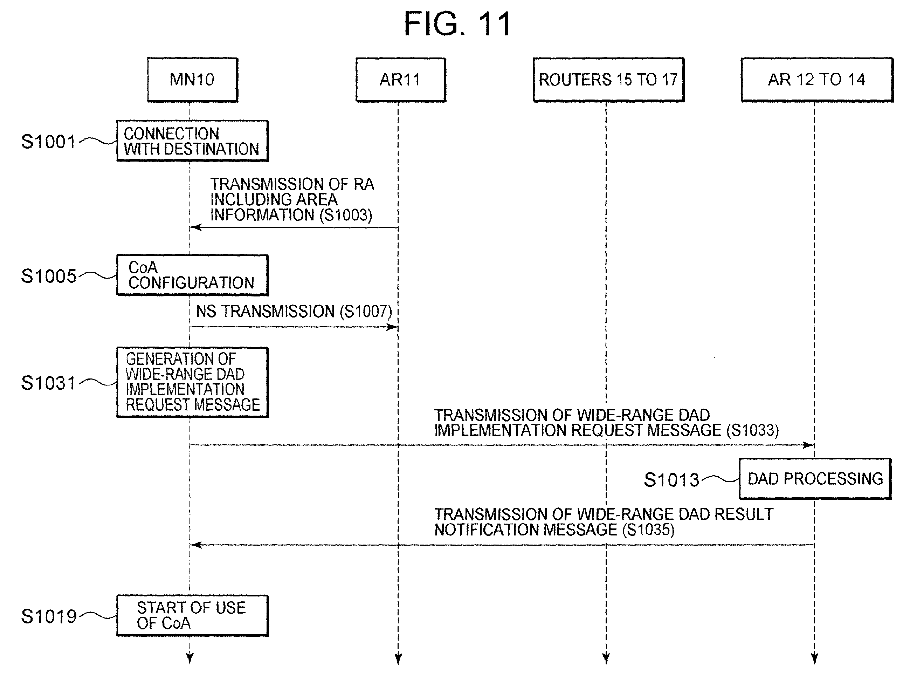

Moreover, in FIG. 8, a flow of a wide-range DAD implementation request message to be transmitted from the MN 10 to each of the ARs 12 to 14 is indicated by broken lines. This flow of a wide-range DAD implementation request message will be described in detail with reference to a sequence chart of FIG. 11 which will be mentioned later.

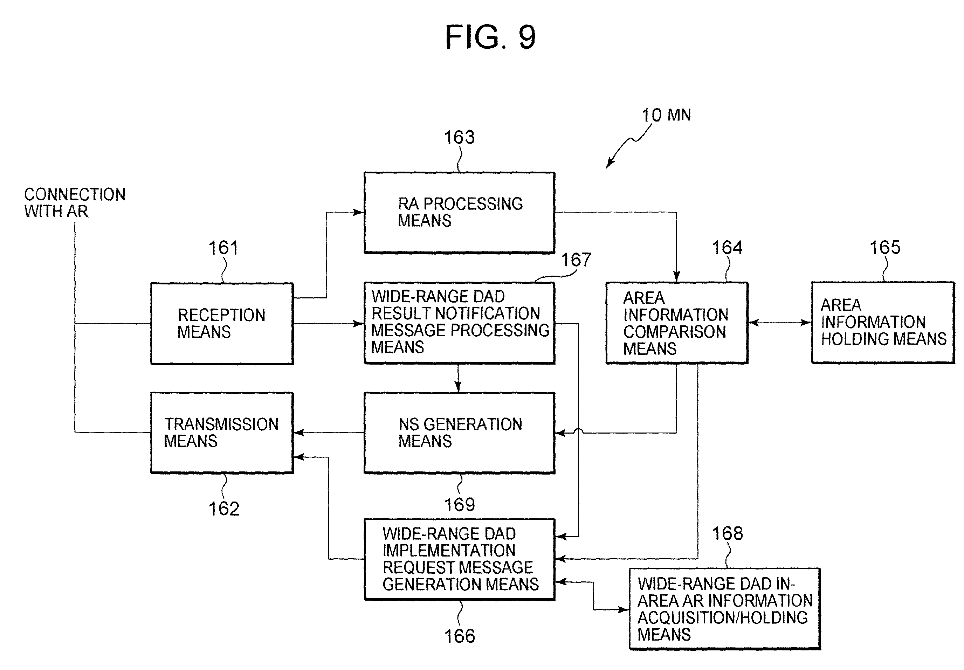

Subsequently, a description will be given of configurations of the MN 10, AR 11, ARs 12 to 14 and routers 15 to 17 in the communication system shown in FIG. 8. First, the configuration of the MN 10 according to the second embodiment of the present invention will be described with reference to FIG. 9. FIG. 9 is a block diagram showing an example of a configuration of the MN 10 according to the second embodiment of the present invention.

The MN 10 shown in FIG. 9 is made up of a reception means 161, a transmission means 162, an RA processing means 163, an area information comparison means 164, an area information holding means 165, a wide-range DAD implementation request message generation means 166, a wide-range DAD result notification message processing means 167, a wide-range DAD in-area AR information acquisition/holding means 168 and an NS generation means 169.

The reception means 161 and the transmission means 162 are means to make a connection through radio communication to ARs (ARs 11 to 14), thereby making communications with the ARs 11 to 14 or an arbitrary node existing at a higher-order position. The RA processing means 163 carries out the processing on an RA received from the connection-accepting side ARs 11 to 14. At this time, in a case in which area information is included in the received RA, this information is notified to the area information comparison means 164.

Moreover, upon receipt of an instruction from the RA processing means 163, the area information comparison means 164 makes a comparison between the notified area information and the area information held in the area information holding means 165 and, when a decision is made that the movement to a new wide-range DAD effective area 31 has taken place (that is, in a case in which it differs from the area information held in the area information holding means 165), gives an instruction to the area information holding means 165 so that the area information holding means 165 holds the notified area information, and it further issues an instruction to the NS generation means for the generation of an NS in order to carry out the normal DAD processing. Still moreover, it issues an instruction to the wide-range DAD implementation request message generation means 166 for the generation of a wide-range DAD implementation request message. On the other hand, if the result of the comparison decision between the notified area information and the area information held in the area information holding means 165 indicates the movement within the same wide-range DAD effective area 31 (that is, when the information held in the area information holding means and the notified information agree with each other), this signifies that the CoA of the MN 10 at the destination has already been subjected to the implementation of the wide-range DAD processing, which enables omitting the implementation of the DAD processing and immediately using the CoA in a connection-accepting subnetwork.

Moreover, upon receipt of an instruction from the area information comparison means 164, the area information holding means 165 carries out the processing to hand over the requested area information (area information to be referred to in the above-mentioned comparison processing), and when receiving an instruction for holding new area information, it deletes the area information already held and holds the new area information. Thus, the information representative of the wide-range DAD effective area 31 it currently exists.

When receiving an instruction for the generation of a wide-range DAD implementation request message from the area information comparison means 164, the wide-range DAD implementation request message generation means 166 makes a request to the wide-range DAD in-area AR information acquisition/holding means 168 for the information (AR list) on the ARs 11 to 14 within the wide-range DAD effective area and generates a wide-range DAD implementation request message to be transmitted to the ARs 12 to 14 (ARs other than the AR 11 which has the connection currently) included in the acquired AR information.

In addition, the wide-range DAD result notification message processing means 167 conducts the processing with respect to the received wide-range DAD result notification message. Since the reception of the wide-range DAD result notification message is decided as the result of the wide-range DAD processing is NG, in this case, for example, the wide-range DAD result notification message processing means 167 gives an instruction to the wide-range DAD implementation request message generation means 166 for the transmission of a wide-range DAD implementation request message relative to the interface ID of the new CoA. Still additionally, upon receipt of an NA indicative of the address duplication from a node on a link managed by the AR 11 which tries to establish a connection currently, the wide-range DAD result notification message processing means 167 gives an instruction to the NS generation means 169 so as to make the NS generation means 169 generate an NS for the DAD processing with respect to a different new CoA.

Moreover, the wide-range DAD in-area AR information acquisition/holding means 168 carries out the processing to acquire and hold the information AR list) on the ARs 11 to 14 existing in the same wide-range DAD effective area 31. In this connection, as this method acquiring the AR list, arbitrary method is employable, for example, it is also acceptable to acquire it from a predetermined server in advance, or to set it manually. Still moreover, for example, it is also possible that an AR list is included in the RA of the AR 11 so that the MN 10 acquires the AR list by the reception of the RA. The NS generation means 169 receives an instruction from the area information comparison means 164 or the wide-range DAD result notification message processing means 167 to conduct the processing to generate an NS for the normal DAD processing with respect to the notified CoA.

With the above-described configuration, by transmitting a wide-range DAD implementation request message including its own interface ID to the ARs 12 to 14 lying in a wide-range DAD effective area 31 after moving to the wide-range DAD effective area 31, the MN 10 shown in FIG. 9 can make a request for the implementation of the DAD processing on a CoA, the MN 10 may use, in the subnetworks 22 to 24 managed by the respective ARs 12 to 14.

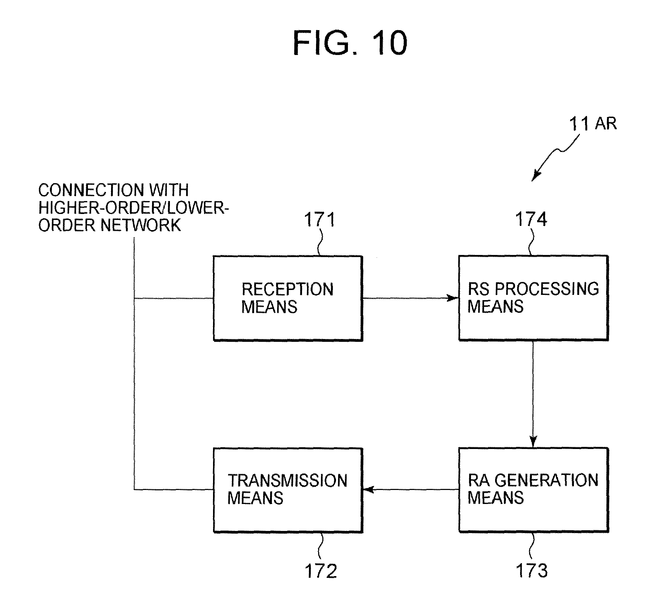

Furthermore, with reference to FIG. 10, a description will be given of a configuration of the AR 11 according to the second embodiment of the present invention. FIG. 10 is a block diagram showing an example of a configuration of the AR 11 according to the second embodiment of the present invention. As well as the AR 11 shown in FIG. 3, also in this case, the AR 11 is an AR with which the MN 10 establishes a first connection in the wide-range DAD effective area 31.

The AR 11 shown in FIG. 10 has a reception means 171, a transmission means 172, an RA generation means 173 and an RS processing means 174. The reception means 171 and the transmission means serve as means to make communication with an arbitrary node existing in a lower-order network (subnetwork 21) managed by the AR 11 or in a higher-order network. The RA generation means 173 conducts the processing to generate and transmit an RA periodically or upon receipt of the MN 10. It is preferable that, in an RA to be generated, there are set flag information indicative of the fact that the wide-range DAD processing is feasible and area information capable of the identification of the wide-range DAD effective area 31. Moreover, the RS processing means 174 conducts the processing on the RS received from an MN and gives an instruction to the RA generation means 173 for the generation /transmission of an RA. This RS processing means 174 is the same as a means for the prior art RS processing.

With the above-described configuration, the AR 11 shown in FIG. 10 can transmit, to the MN 10 connected as a subordinate, an RA representative of the fact that the wide-range DAD processing is available and effective.

In addition, the ARs 12 to 14 according to the second embodiment of the present invention have the same configuration as those of the ARs 12 to 14 (see FIG. 4) according to the above-described first embodiment. Still additionally, in the second embodiment of the present invention, since a wide-range DAD implementation request message/wide-range DAD result notification message is directly interchanged between the MN 10 and the ARs 12 to 14, a conventional router can be used as the routers 15 to 17.

Furthermore, a description will be given of an example of an operation according to the second embodiment of the present invention. FIG. 11 is a sequence chart showing an example of an operation according to the second embodiment of the present invention. In comparison between the operation showing the sequence chart of FIG. 11 and the sequence chart (FIG. 6 and FIG. 7) according to the above-described first embodiment, the second embodiment of the present invention differs greatly therefrom in that a message is directly interchanged between the MN 10 and each of the ARs 11 to 14. A description will be given hereinbelow of the operation showing the sequence chart of FIG. 11.

The processing in steps S1001 to S1007 of FIG. 11 is the same as that in that in the steps S1001 to S1007 according to the above-described first embodiment. Although in the above-described first embodiment the AR 11 generates a wide-range DAD implementation request message (step S1009 in FIG. 6 and FIG. 7) after the processing in the step S1007, in the second embodiment, as shown in FIG. 11, the MN 10 generates a wide-range DAD implementation request message (step S1031) and directly transmits the wide-range DAD implementation request message to each of the other ARs 12 to 14 different from the connection-accepting side AR 11 (step S1033).

In this conjunction, there is a need for the MN 10 to previously hold the information on a wide-range DAD implementation request message transmission side (information on the other ARs 12 to 14 existing in the same wide-range DAD effective area 31 as the area to which it pertains). The method of acquiring the information on the ARs 12 to 14 is realizable with arbitrary methods. For example, the MN 10 can acquire the information on the ARs 12 to 14 in a manner such that a list where described are the addresses of the ARs 12 to 14, the prefixes of the subnetworks 22 to 24 and others is contained in an RA to be transmitted from the AR 11.

Each of the ARs 12 to 14 carries out the DAD processing on the MN 10 in the subnetworks 22 to 24 each managed thereby (step S1013) and directly transmits a result of the DAD processing as a wide-range DAD result notification message to the MN 10 (step S1035). Therefore, the MN 10 can grasp the result of the DAD processing in the subnetworks 22 to 24 respectively managed by the ARs 12 to 14 on the basis of the wide-range DAD result notification message received from each of the ARs 12 to 14 (or the result indicative of no reception of the wide-range DAD result notification message).

As described above, according to the second embodiment of the present invention, in the MN 10, simultaneously with the DAD processing on a CoA to be conducted in the case of a connection to an arbitrary AR (for example, AR 11) within a predetermined wide-range DAD effective area 31, the DAD processing on the CoA of the MN 10 can be conducted in the other ARs (for example, ARs 12 to 14) within the DAD effective area 31. Thus, when the MN 10 makes a connection with an arbitrary AR so as to implement the DAD processing in a subnetwork related to this AR only once, it is possible to complete the DAD processing to be required at a connection to a subnetwork under the other AR, which enables omitting the DAD processing at the connection to the other AR after the movement.

### <Third Embodiment>

Furthermore, a description will be given of a third embodiment of the present invention. In the third embodiment of the present invention, a description will be given of a case in which wide-range DAD processing according to the present invention is applied to an HMIP (Hierarchical Mobile IP). In the case of the HMIP, an MN holds two addresses of an RCoA and an LCoA. The RCoA is an address effective in a network managed by an MAP (Mobility Anchor Point) existing in a higher-order position of the network, while the LCoA is an address effective in a network with which an MN is in connection. The MN uses the RCoA an address associated with an HoA, and registers this RCoA in an HA (Home Agent) or CN (Correspondent Node) and registers the association between the RCoA and the LCoA in an MAP. Thus, a packet forwarded to the RCoA is transferred to the LCoA by the MAP, and the MN 10 can receive this packet. Moreover, in the case of the employment of the HMIP, even if the MN moves in the area of the MAP, since a change of the RCoA of the MN does not take place, as long as the MN moves in the area of the MAP, there is no need to again register the address in the HA or CN. However, as in the case of no employment of the HMIP, since a change of the LCoA takes place in accordance with the movement of the MN (variation of the connection-accepting side), whenever the connection-accepting side of the MN changes, there is a need to conduct the DAD processing on the LCoA so as to confirm the uniqueness thereof and further to register a new LCoA in the MAP after the completion of the confirmation of the uniqueness. Accordingly, in a case in which the wide-range DAD processing according to the present invention is applied to the LCoA of the HMIP, when the MN carries out the DAD processing only once at the first connection with the wide-range DAD effective area 31, it is possible to complete the DAD processing on all the LCoAs the MN can use in this wide-range DAD effective area 31, which can provide an advantage in that there is no need for the MN to carry out the DAD processing each time with respect to the LCoA whenever it moves.

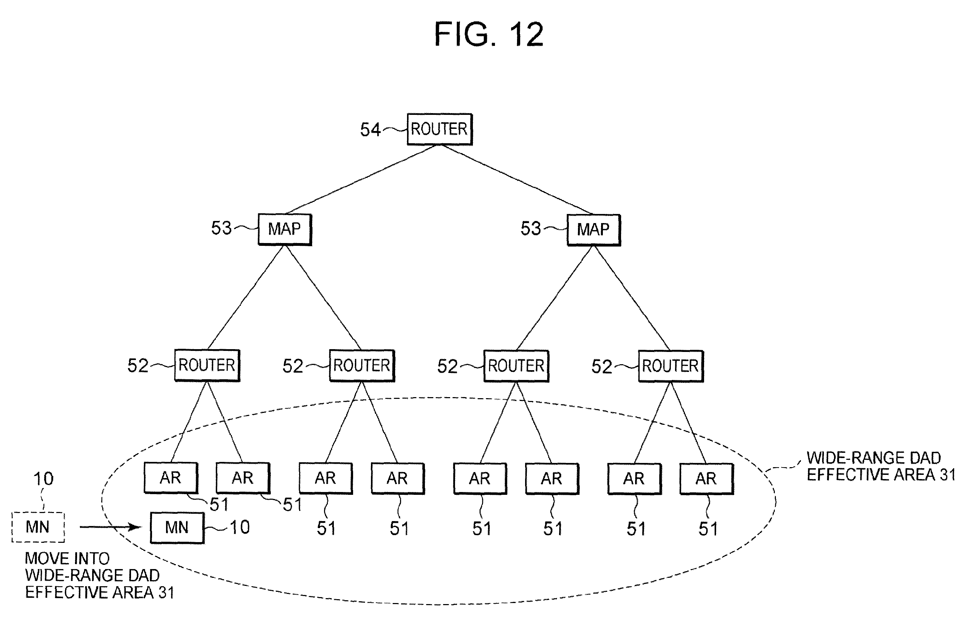

FIG. 12 is an illustration of an example of a configuration of a communication system according to the third embodiment of the present invention. The communication system shown in FIG. 12 is composed of 8 ARs 51, 4 routers each connected to two ARs 51, two MAPs 53 each connected to two routers 52 and a router 54 connected to the two MAPs 53, which constitute a hierarchical network. For example, as shown in FIG. 12, in a case in which, in a communication system, a network including two or more MAPs 53 forms one wide-range DAD effective area 31, if the same interface ID is used with respect to not only an LCoAbut also an RCoA, since the uniqueness thereof is assured, even when the MN 10 moves to a network under the adjacent MAP 53, it is possible to immediately start the use of the RCoA without implementing the DAD processing stemming from a change of the RCoA.

As described above, according to the third embodiment of the present invention, when the present invention is applied to an HMIP, with respect to an LCoA and RCoA to be used in the HMIP, it is possible to realize the omission of the DAD processing as well as the above-described first and second embodiments.

### <Fourth Embodiment>

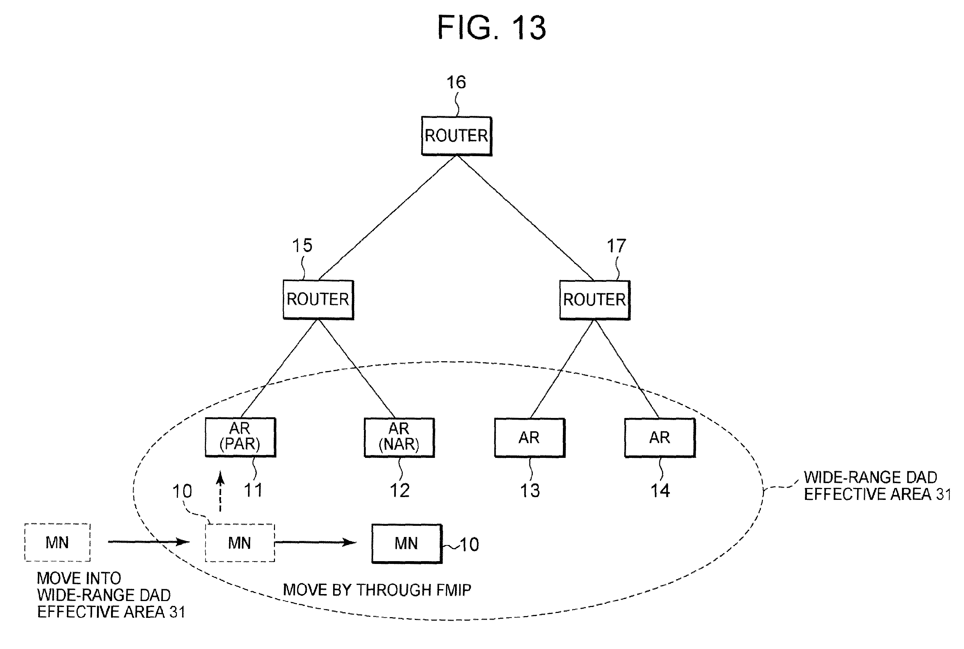

Furthermore, a description will be given of a fourth embodiment of the present invention. In the fourth embodiment of the present invention, a description will be given of a case in which the wide-range DAD processing according to the present invention is applied to an FMIP (Fast Handovers for Mobile IPv6: First Handover Mobile IP). FIG. 13 is an illustration of an example of a configuration of a communication system according to the fourth embodiment of the present invention. Although the configuration of the network shown in FIG. 13 is basically identical to the network configuration shown in FIG. 1, an FMIP is mounted on the ARs 11 to 14. For example, as shown in FIG. 13, in a case in which the MN 10 is connected to a communication system corresponding to the FMIP, when the wide-range DAD processing according to the present invention is further applied to this communication system, the omission of the DAD processing by the FMIP is realizable. That is, when an AR (for example, AR 11) before the MN 10 moves is taken as a Previous AR (PAR) and a destination AR (for example, AR 12) is taken as a New AR (NAR), in a case in which the MN 10 establishes a connection with the AR (PAR) 11, since the wide-range DAD processing has already been conducted and the uniqueness of the NCoA (New CoA) to be used in the destination AR (NAR) 12 has been confirmed, for example, the AR (NAR) 12 can immediately return an HAck (Handover Acknowledge) message to the AR (PAR) 11 without conducting the DAD processing (confirmation of the uniqueness of the NCoA) at the reception of an HI (Handover Initiate) message on the FMIP from the AR (PAR) 11, which enables the realization of prompter handover.

As described above, according to the fourth embodiment of the present invention, when the present invention is applied to an FMIP, with respect to the NCoA to be confirmed by the FMIP before the handover of an MN, as well as the above-described first and second embodiments, the omission of the DAD processing becomes realizable.

The respective functional blocks used in the above description of the embodiments of the present invention are typically realized with an LSI (Large Scale Integration) which is an integrated circuit. it is also acceptable that these blocks are individually formed as one chip, or that a portion of or all of these blocks are formed as one chip. Although an LSI is taken in this case, it is sometimes referred to as an IC (Integrated Circuit), system LSI, super LSI or ultra LSI.

Moreover, the technique for the formation of an integrated circuit is not limited to the LSI, but a dedicated circuit or a general-purpose processor is realizable. After the manufacturing of an LSI, it is also acceptable to utilize an FPGA (Field Programmable Gate Array) which enables the programming or a reconfigurable processor which allows the reconfiguration of connections and setting of circuit cells in the interior of the LSI.

Still moreover, if a technique for the formation of an integrated circuit replaceable with the LSI appears owing to advance in semiconductor technology or a different technology derived therefrom, the functional blocks can naturally be integrated through the use of this technique. For example, a biotechnology or the like may be applicable.

### INDUSTRIAL APPLICABILITY

The present invention provides an advantage of reducing or omitting the time taken for the DAD processing solicited when a mobile communication device establishes a new subnetwork, thereby reducing the packet loss and delay for improving the communication efficiency and is applicable to a network technology including a mobile communication device such as a mobile node or mobile router. In particular, the present invention is applicable to a communication control technique when a mobile communication device carries out the handover between subnetworks through the use of a mobility support technique such as a mobile IP.

## Claims

1. A communication network management method for a communication system including a plurality of access routers and a mobile communication device connectable to a subnetwork under management of each of said plurality of access routers, comprising:
a step in which, when said mobile communication device establishes a connection with one of said plurality of access routers, said mobile communication device transmits a message for confirming the uniqueness of an address to be used in a subnetwork under the management of said access router which is an object of connection, to an arbitrary node in said subnetwork under the management of said access router with which said mobile communication device establishes the connection;
a step in which said access router which has received the message and with which said mobile communication device establishes the connection transmits a request message, which makes a request for confirming the uniqueness of an address to be used when said mobile communication device establishes a connection with the other access router in said subnetwork under the management of the other access router, to the other access router; and
a step in which, upon receipt of the request message from said access router with which said mobile communication device establishes the connection, the other access router confirms the uniqueness of the address, which is used by said mobile communication device, in said subnetwork under the management of the other access router.

2. The communication network management method according to claim 1, comprising:
a step of, when a result of the confirmation on the uniqueness of the address, which is used by said mobile communication device, in the other access router shows that the address is unusable because of being in a duplicate state, transmitting, to said access router with which said mobile communication device establishes the connection, an address duplicate notification message for notifying that the address is unusable; and
a step in which said access router which has received the address duplicate notification message from the other access router and with which said mobile communication device establishes the connection transmits an unusable-state notification message for the notification of the unusable-state of the address, which is used when said mobile communication device establishes the connection with the other access router in said subnetwork under the management of the other access router, to said mobile communication device.

3. The communication network management method according to claim 2, comprising:
a step of, when a result of the confirmation on the uniqueness of the address, which is used by said mobile communication device, in the other access router shows the uniqueness of the address, transmitting, to said access router with which said mobile communication device establishes the connection, an address confirmation notification message for notifying that the address is usable; and
a step in which said access router which has received the address confirmation notification message from the other access router and with which said mobile communication device establishes the connection transmits a usable-state notification message for the notification of the usable-state of the address, which is used when said mobile communication device establishes the connection with the other access router in said subnetwork under the management of the other access router, to said mobile communication device.

4. The communication network management method according to any one of claims 1 to 3, comprising:
a step in which said access router with which said mobile communication device establishes the connection acquires address information on the other access router; and
a step in which said access router with which said mobile communication device establishes the connection generates the request message to be transmitted to the other access router, on the basis of the address information on the other access router.

5. A communication network management method for a communication system including a plurality of access routers and a mobile communication device connectable to a subnetwork under management of each of the plurality of access routers, comprising:
a step in which said mobile communication device acquires address information on said plurality of access routers;
a step in which, when establishing a connection with one of said plurality of access routers, said mobile communication device transmits a message for confirming the uniqueness of an address, which is used in a subnetwork under the management of said access router with which said mobile communication device establishes the connection, to an arbitrary node in said subnetwork under the management of said access router with which said mobile communication device establishes the connection and, on the basis of the address information on said plurality of access routers, transmits, to the other access router, a request message for making a request for confirming the uniqueness of an address used when said mobile communication device establishes the connection with the other access router in said subnetwork under the management of the other access router; and
a step in which, upon receipt of the request message from said mobile communication device, the other access router confirms the uniqueness of the address used by said mobile communication device in said subnetwork under the management of the other access router.

6. The communication network management method according to claim 5, comprising:
a step of, when a result of the conformation of the uniqueness of the address, which is used by said mobile communication device, in the other access router shows that the address is unusable because of being in a duplicate state, transmitting, to said mobile communication device, an unusable-state notification message for notifying that the address is unusable.

7. The communication network management method according to claim 6, comprising:
a step of, when a result of the conformation of the uniqueness of the address, which is used by said mobile communication device, in the other access router shows the confirmation of the uniqueness of the address, transmitting, to said mobile communication device, a usable-state notification message for notifying that the address is usable.

8. The communication network management method according to claim 2 or 6, comprising:
a step of, when said mobile communication device does not receive the unusable-state notification message from said access router with which the mobile communication device establishes the connection, making a decision that the address, which is used when said mobile communication device establishes a connection with the other access router in said subnetwork under the management of the other access router, is usable so that the address decided as being usable is used without confirming the uniqueness of the address when said mobile communication device moves and establishes a connection with the other access router.

9. The communication network management method according to claim 8, comprising:
a step in which each of said plurality of access routers existing in a predetermined area transmits an area information message including the same area information corresponding to the same predetermined area periodically or in accordance with a request from said mobile communication device;
a step of acquiring and holding the area information message when said mobile communication device establishes a connection with each of said plurality of access routers; and
a step in which said mobile communication device makes a comparison between the area information acquired from said access router to be connected thereto after movement and the area information acquired from said access router connected thereto when a decision is made that the address to be used at the connection with the other access router is usable and, when the two area information agree with each other, a decision is made that the access router to be connected thereto after the movement is the other access router related to the address which was already decided as being usable.

10. The communication network management method according to claim 1 or 5, comprising:
a step in which each of said plurality of access routers transmits a prefix information message including prefix information on said subnetwork under the management of said access router periodically or in accordance with a request from said mobile communication device;
a step in which, at a connection with one of said plurality of access routers, the mobile communication device generates an address to be used in a subnetwork under the management of said access router, with which said mobile communication device establishes the connection, by making a combination of the prefix information and an interface ID of said mobile communication device; and
a step in which, when the interface ID of said mobile communication device is included in the request message, the other access router generates the address, which is used by the mobile communication device in said subnetwork under the management of the other access router and which is used for confirming the uniqueness, by making a combination of the prefix information on said subnetwork under the management thereof and the interface ID of said mobile communication device.

11. An access router for use in a communication system including a plurality of access routers each managing a subnetwork with which a mobile communication device is connectable, comprising:
address confirmation message reception means for receiving, from said mobile communication device establishing a connection with a subnetwork under management of said access router, a message for confirming the uniqueness of an address to be used by said mobile communication device in said subnetwork;
address confirmation request means for, upon receipt of the address confirmation message from said mobile communication device, transmitting, to the other access router, a request message for making a request for confirming the uniqueness of the address used when said mobile communication device establishes a connection with the other access router in a subnetwork under management of the other access router;
address duplicate reception means for receiving a confirmation result indicative of the fact that the address detected by the other access router is unusable; and
unusable-state notification means for, upon receipt of the confirmation result indicative of the unusable state of the address from the other access router, notifying, to said mobile communication device, the unusable-state of the address used when said mobile communication device establishes a connection with the other access router in said subnetwork under the management of the other access router.

12. The access router according to claim 11, comprising:
address confirmation reception means for receiving a confirmation result, indicative of the fact that the address detected by the other access router is usable, from the other access router; and
usable-state notification means for, upon receipt of the confirmation result indicative of the usable-state of the address from the other access router, notifying, to said mobile communication device, the usable-state of the address to be used when said mobile communication device establishes a connection with the other access router in said subnetwork under the management of the other access router.

13. The access router according to claim 11 or 12, comprising:
address information holding means for holding address information on the other access router existing in a predetermined area;
request message generation means for generating the request message to the other access router on the basis of the address information on the other access router held in said address information holding means; and
area information transmission means for transmitting an area information message including the same area information as area information set in the other access router existing in the same predetermined area periodically or in accordance with a request from said mobile communication device.

14. An access router for use in a communication system including a plurality of access routers each managing a subnetwork with which a mobile communication device is connectable, comprising:
address confirmation request reception means for receiving a request message transmitted from an access router, different from said access router, which has received a message transmitted from said mobile communication device establishing the different access router to make a request for confirming the uniqueness of an address to be used in the subnetwork under management, with the request message being for making a request for confirming the uniqueness of the address to be used by said mobile communication device in said subnetwork under the management thereof; and
address confirmation means for, upon receipt of the request message, confirming the uniqueness of the address to be used by said mobile communication device in said subnetwork under the management thereof.

15. The access router according to claim 14, comprising address duplicate notification means for, when a result of the confirmation on the uniqueness of the address to be used by said mobile communication device shows that the address is unusable because of being in a duplicate state, notifying the unusable-state of the address to the access router with which said mobile communication device establishes a connection.

16. An access router for use in a communication system including a plurality of access routers each managing a subnetwork with which a mobile communication device is connectable, comprising:
address confirmation request reception means for receiving a request message from said mobile communication device, which establishes a connection with an access router different from said access router, for making a request to confirm the uniqueness of an address to be used by said mobile communication device in a subnetwork under management; and
address confirmation means for, upon receipt of the request message, confirming the uniqueness of the address to be used by said mobile communication device in the subnetwork under the management.

17. The access router according to claim 16, comprising unusable-state notification means for, when a result of the confirmation on the uniqueness of the address to be used by said mobile communication device shows a detection of the address being unusable because being in a duplicate state, notifying the unusable-state of the address to said mobile communication device.

18. The access router according to claim 14 or 16, comprising address reservation means for, when a result of the confirmation on the uniqueness of the address to be used by said mobile communication device shows the confirmation of the uniqueness of the address, carrying out address reservation processing to inhibit the use of the address by a communication device other than said mobile communication device.

19. The access router according to claim 14 or 16, comprising area information transmission means for transmitting an area information message including area information set to be identical to area information set in said plurality of access routers existing in a predetermined area periodically or in accordance with a request from said mobile communication device.

20. The access router according to claim 14 or 16, comprising address generation means for, when the interface ID of said mobile communication device is included in the request message, generating the address to be used by said mobile communication device in the subnetwork under management, for the confirmation of the uniqueness by making a combination of prefix information on the subnetwork under the management and the interface ID of said mobile communication device.

21. A mobile communication device, which is connectable to a subnetwork under management of each of a plurality of access routers, comprising:
message reception means for, at a connection with one of said plurality of access routers, receiving a message including information indicative of a predetermined function from said access router which is the object of connection;
address confirmation message transmission means for, at a connection with one of said plurality of access routers, transmitting a message for confirming the uniqueness of an address, which is used in a subnetwork under the management of said access router which is the object of connection, to an arbitrary node in said subnetwork under the management of said access router which is the object of connection;
timer means for measuring time upon receipt of the message including the information indicative of the predetermined function; and
address usage control means for, when the time measured by said timer means exceeds a predetermined time without receiving, from said access router which is the object of connection, a unusable-state notification message for a notification of an unusable-state of the address used when said mobile communication device establishes a connection with the other access router in a subnetwork under management of the other access router, executing control to use the address without confirming the uniqueness of the address at the connection with the subnetwork under the management of the other access router.

22. A mobile communication device, which is connectable to a subnetwork under management of each of a plurality of access routers, comprising:
message reception means for, at a connection with one of said plurality of access routers, receiving a message including information indicative of a predetermined function from said access router which is the object of connection;
address information holding means for holding address information on said plurality of access routers;
message transmission means for, at a connection with one of said plurality of access routers, transmitting a message for confirming the uniqueness of an address, which is used in a subnetwork under the management of said access router which is the object of connection, to an arbitrary node in a subnetwork under the management of said access router which is the object of connection and for, on the basis of the address information on said plurality of access routers, transmitting, to the other access router, a request message for making a request for confirming the uniqueness of the address used when said mobile communication device establishes a connection with the other access router in a subnetwork under the management of the other access router;
timer means for measuring time upon receipt of the message including the information indicative of the predetermined function; and
address usage control means for, when the time measured by said timer means exceeds a predetermined time without receiving, from said access router which is the object of transmission of the request message, a unusable-state notification message for a notification of an unusable-state of the address used when said mobile communication device establishes a connection with the other access router in the subnetwork under the management of the other access router, executing control to use the address without confirming the uniqueness of the address at a connection with the subnetwork under the management of the other access router.

23. The mobile communication device according to claim 21 or 22, comprising:
a step for, at a connection with each of said plurality of access routers, acquiring an area information message including area information and holding the area information; and
area decision means for making a comparison between the area information acquired from said access router to be connected after movement and the area information acquired from said access router connected when a decision is made that the address used at the connection with the other access router is usable and for, when the two area information agree with each other, making a decision that said access router to be connected after the movement is the other access router related to the address which was already decided as being usable.

24. The mobile communication device according to claim 21 or 22, comprising address generation means for, at a connection with one of said plurality of access routers, generating an address to be used in the subnetwork under the management of said access router which is the object of connection by making a combination of the prefix information and the interface ID of the mobile communication device.
